# EUROPEAN PATENT APPLICATION

(11) **EP 4 807 491 A1**
(43) Date of publication of application: **16.09.2026**
(21) Application number: 24909891.4
(22) Date of filing: 23.08.2024
(51) Int. Cl.: G06F 1/16

(54) **ELECTRONIC DEVICE, PERIPHERAL DEVICE, TERMINAL SYSTEM, AND STATUS DETECTION METHOD**

(30) Priority: 27.12.2023 CN 202311831772
(71) Applicant: Honor Device Co., Ltd., Shenzhen, Guangdong 518040 (CN)
(72) Inventor: ZHANG, Zhen, Shenzhen, Guangdong 518040 (CN); ZHANG, Jianfei, Shenzhen, Guangdong 518040 (CN); YUE, Yongbao, Shenzhen, Guangdong 518040 (CN)
(74) Representative: Isarpatent
(86) International application number: PCT/CN2024/114224
(87) International publication number: WO 2025/138941

(57) **Abstract**

This application discloses an electronic device, a peripheral device, a terminal system, and a state detection method. The electronic device includes a first body and an electrical connector. The first body includes a first bezel and a display screen. The first bezel surrounds an outer edge of the display screen. The electrical connector is located at the first bezel, and a plurality of electrically connected first terminals are exposed on the first bezel, so that the electrical connector is detachably connected to the peripheral device. In this way, the peripheral device may be electrically connected to the electrical connector in a forward or reverse manner, which is applicable to different application scenarios, and improves user experience. In addition, the peripheral device does not need to be built in the electronic device, and the peripheral device does not occupy space, so that requirements of a full screen and a narrow black border of the electronic device can be implemented. According to the state detection method, a state of the peripheral device may be detected in real time, and corresponding prompt information may be provided to a user in time, to avoid loss of the peripheral device.

## Description

This application claims priority to Chinese Patent Application No. 202311831772.5, filed with the China National Intellectual Property Administration on December 27, 2023 and entitled "ELECTRONIC DEVICE, PERIPHERAL DEVICE, TERMINAL SYSTEM, AND STATE DETECTION METHOD", which is incorporated herein by reference in its entirety.

### TECHNICAL FIELD

This application relates to the field of terminal device technologies, and in particular, to an electronic device, a peripheral device, a terminal system, and a state detection method.

### BACKGROUND

With continuous development of electronic technologies, notebook computers are favored by people due to their small and portable features, and have been massively used in people's daily life. A notebook computer is typically equipped with a camera, so as to serve as an auxiliary tool in a communication manner such as a video chat.

An existing notebook computer is generally integrated with a camera. However, a current camera cannot move during photographing, and only a user in front of the screen can be photographed. However, in a scenario such as an interview, when a picture behind the screen needs to be shot, an additionally configured camera needs to be configured to perform shooting, resulting in poor user experience.

### SUMMARY

This application provides an electronic device, a peripheral device, a terminal system, and a state detection method, to resolve a problem that an existing camera can only shoot a user in front of a screen and cannot shoot an image behind the screen.

According to a first aspect, this application provides an electronic device, including a first body and an electrical connector. The first body includes a first bezel and a display screen, the first bezel surrounds an outer edge of the display screen, and an extension direction of the first bezel is different from an extension direction of the display screen. The electrical connector is arranged at the first bezel; the electrical connector includes a plurality of first terminals exposed on the first bezel; and the electrical connector is configured to detachably connect to a peripheral device, so that the plurality of first terminals are electrically connected to a plurality of second terminals of the peripheral device.

In the electronic device provided in this embodiment of this application, the first bezel surrounds the outer edge of the display screen, and the extension direction of the first bezel is different from the extension direction of the display screen. The electrical connector is located at the first bezel, and the plurality of electrically connected first terminals are exposed on the first bezel, so that the electrical connector is detachably connected to the peripheral device. In this way, the peripheral device is located at the top of the first body, and the peripheral device may be electrically connected to the electrical connector in a forward or reverse manner, to adapt to different application scenarios and improve user experience. In addition, the peripheral device does not need to be built in the electronic device, and the peripheral device does not occupy space, so that requirements of a full screen and a narrow black border of the electronic device can be implemented.

In some implementations, a mounting slot is provided on the first bezel; the plurality of first terminals are exposed in the mounting slot; and the mounting slot is configured to enable at least a part of the peripheral device to be detachably embedded in the mounting slot, so that the plurality of second terminals of the peripheral device are electrically connected to the plurality of first terminals of the electrical connector. In this way, the mounting slot may play a role of mounting and positioning, to limit movement of the peripheral device in different directions. This can improve stability of the peripheral device and the electrical connector.

In some implementations, the plurality of first terminals are distributed at equal intervals in a length direction of the first bezel. The plurality of second terminals are distributed at equal intervals in a length direction of the peripheral device in a one-to-one correspondence with the plurality of first terminals. Terminal definitions of the plurality of first terminals are arranged in a centrally symmetrical manner. In this way, when the peripheral device is electrically connected to the electronic device, the peripheral device and the electrical connector may be electrically connected in a forward manner or a reverse manner, to meet different use requirements and improve user experience.

In some implementations, the first body further includes at least one first magnetic body; and the at least one first magnetic body is located at an inner side of the first bezel and is adjacent to the electrical connector. In this way, the first magnetic body is configured to absorb the peripheral device, to improve stability of the peripheral device and the first body.

In some implementations, an inner surface of the first bezel includes at least one first receiving groove; the at least one first receiving groove is adjacent to the mounting slot; and the at least one first magnetic body is arranged in a one-to-one correspondence in the at least one first receiving groove. In this way, the first magnetic body is received by using the first receiving groove, so that occupation of inner space of the first body by the first magnetic body can be avoided, and stability of the first magnetic body and the first bezel can be further improved.

In some implementations, the electronic device further includes a first sensing device, where the first sensing device is located at the inner side of the first bezel and is adjacent to the at least one first magnetic body; and the first sensing device is configured to detect whether the peripheral device is in a connected state with the electrical connector. In this way, a state of the peripheral device may be detected in real time, to play prompt information to a user, so as to avoid loss of the peripheral device.

In some implementations, the electrical connector further includes a plurality of cables, and the plurality of cables are connected to the plurality of first terminals. The first body includes a first housing, the first housing includes a housing body and the first bezel, the housing body is arranged on a back surface of the display screen, and the first bezel surrounds an outer edge of the housing body. The housing body includes a first housing surface, and the first housing surface faces the display screen. The first housing surface includes a second receiving groove, the second receiving groove is adjacent to the mounting slot, and the second receiving groove is configured to provide routing space for the plurality of cables. In this way, a routing direction in the electrical connector may be changed, so that a cable outlet location of a cable is far away from the display screen, thereby avoiding a case the cable outlet location of the cable hinders extension of the display screen. The cable outlet location of the cable avoids the display screen, so that the display screen can abut against the first bezel, thereby reducing a size of a black border of the display screen, implementing the requirements of the full screen and the narrow black border, and improving an aesthetic effect.

In some implementations, the housing body further includes a second housing surface, and the second housing surface faces an external environment. A depth of the second receiving groove is greater than a thickness of the housing body, so that a part of the second housing surface adjacent to the mounting slot forms a convex hull structure protruding toward the external environment. Projection regions of the electrical connector and the at least one first magnetic body on the second housing surface are located in a projection region of the convex hull structure on the second housing surface. In this way, the convex hull structure locally protrudes relative to the first housing in a thickness direction, so that a thickness of a remaining location of the first housing is thin, and an appearance effect of the entire device is not affected.

In some implementations, the first housing surface further includes a third receiving groove. The second receiving groove is located in the third receiving groove, and a depth of the third receiving groove is less than the depth of the second receiving groove. The at least one first receiving groove is located in a length range of the third receiving groove. In this way, components located in the convex hull structure may be received by using the third receiving groove, to avoid a case that the components affect a layout of other components in the first body.

In some implementations, the electrical connector further includes a metal medium and an insulating member, and the insulating member wraps an outer side of the metal medium. The metal medium is configured to form the plurality of first terminals and the plurality of cables. The plurality of first terminals are exposed from one end surface of the insulating member, and the plurality of cables are exposed and extended from the other end surface of the insulating member. In this way, an electrical signal may be transmitted through routing of the metal medium, and the first housing may be insulated from the metal medium by using the insulating member.

In some implementations, the first body further includes a buffer medium, where the buffer medium is located between the first bezel and the display screen. At least a part of the buffer medium extends along a back side of the first terminal, and approaches the cable. In this way, local stress concentration caused by the display screen being in direct contact with the first bezel can be avoided, thereby avoiding damage to the display screen.

In some implementations, the electronic device further includes a second body, where the second body is rotatably connected to the first body. The second body includes a second bezel. A receiving mechanism is arranged inside the second body. The receiving mechanism is adjacent to the second bezel, and a receiving hole is provided on the second bezel, so that the peripheral device is received in the receiving mechanism through the receiving hole. In this way, the peripheral device is received in the receiving mechanism of the second body, so that loss of the detachable peripheral device can be avoided.

In some implementations, the second body further includes a second sensing device, where the second sensing device is arranged in the receiving mechanism, and the second sensing device is configured to detect whether the peripheral device is received in the receiving mechanism. In this way, a state of the peripheral device may be detected in real time, to play prompt information to a user, so as to avoid loss of the peripheral device.

In some implementations, the second body further includes at least one third magnetic body. The at least one third magnetic body is spaced apart and located on a surface of the receiving mechanism facing the receiving hole. The third magnetic body is configured to absorb the peripheral device, so that the peripheral device is fixed in the receiving mechanism. In this way, the third magnetic body is attracted to the second magnetic body of the peripheral device, to improve stability of the peripheral device and the receiving mechanism, and further avoid loss of the peripheral device due to falling out of the receiving mechanism.

In some implementations, the receiving mechanism includes at least one spring fastener, and the at least one spring fastener is located on a surface of the receiving mechanism facing the receiving hole. When the peripheral device is received in the receiving mechanism, the at least one spring fastener is configured to: be distributed on two sides of the second terminal of the peripheral device, be in elastic contact with the peripheral device, and eject the peripheral device from the receiving mechanism when the peripheral device is pressed externally. In this way, the peripheral device can be easily taken out from the receiving mechanism.

According to a second aspect, this application provides a peripheral device, including: a device body, a plurality of second terminals, and at least one second magnetic body. The plurality of second terminals are located at one end of the device body and protrude toward an external environment relative to the device body. The at least one second magnetic body is located in the device body and is located at one end of the device body on which the plurality of second terminals are arranged. The at least one second magnetic body is adjacent to the plurality of second terminals. The device body is configured to detachably connect to an electrical connector of the electronic device, so that the plurality of second terminals are electrically connected to a plurality of first terminals of the electrical connector, and the second magnetic body is attracted to a first magnetic body arranged in the electronic device.

The peripheral device provided in this embodiment of this application may be detachably connected to a first body of the electronic device in a forward or reverse manner. The peripheral device is electrically connected to the electrical connector in the first body, to send data generated by the peripheral device to the electronic device by using the electrical connector, so that the electronic device has a corresponding function, to adapt to different application scenarios, so as to improve user experience. In addition, the peripheral device exists separately from the electronic device, the peripheral device does not need to be built in the electronic device, and the peripheral device does not occupy space, so that requirements of a full screen and a narrow black border of the electronic device can be implemented.

According to a third aspect, this application provides a terminal system, including the electronic device provided in the first aspect and the peripheral device provided in the second aspect. The peripheral device is electrically connected to an electrical connector of the electronic device, or the peripheral device is received in a receiving mechanism of the electronic device.

According to the terminal system provided in this embodiment of this application, the peripheral device is detachably connected to the electronic device. During use, the peripheral device is electrically connected to the electrical connector of the electronic device. When not in use, the peripheral device is received in the receiving mechanism provided by the electronic device, which is very convenient to use.

In some implementations, the terminal system further includes: a receiving chamber, where the receiving chamber is configured to receive a peripheral device, and the receiving chamber includes a third sensing device, and the third sensing device is configured to detect whether the peripheral device is received in the receiving chamber. In this way, a component of the electronic device may be used as the receiving chamber to receive the peripheral device, thereby avoiding loss of the peripheral device.

According to a fourth aspect, this application provides a peripheral device state detection method, applied to the electronic device method provided in the first aspect, and the method including: The electronic device detects whether a peripheral device is received in a receiving mechanism, and detects whether the peripheral device is in a connected state with an electrical connector; plays first prompt information if the peripheral device is received in the receiving mechanism; plays second prompt information if the peripheral device is in the connected state with the electrical connector; and plays third prompt information if the peripheral device is not received in the receiving component and is not in the connected state with the electrical connector.

According to the peripheral device state detection method provided in this embodiment of this application, anti-loss detection logic of the peripheral device is provided, that is, it may be detected whether the peripheral device is received in the receiving mechanism, and it may be detected whether the peripheral device is in the connected state with the electrical connector. In addition, corresponding prompt information may be played according to different detection results, and a state of the peripheral device may be provided to a user in time, to avoid loss of the peripheral device.

In some implementations, the receiving mechanism includes a second sensing device, the peripheral device includes a second magnetic body, and the second sensing device is configured to generate an electrical signal corresponding to a magnetic field strength around the receiving mechanism. The detecting whether a peripheral device is received in a receiving mechanism includes: detecting whether the electrical signal sent by the second sensing device is received; determining, if the electrical signal is received, whether the electrical signal is greater than or equal to a preset signal threshold; and determining, if the electrical signal is greater than or equal to the preset signal threshold, that the peripheral device is received in the receiving mechanism. In this way, a magnetic field strength in the receiving mechanism is detected by using the second sensing device, to determine whether the peripheral device is received in the receiving mechanism, thereby improving detection accuracy.

In some implementations, the detecting whether a peripheral device is received in a receiving mechanism further includes: determining, if the electrical signal is not received or the electrical signal is less than the preset signal threshold, that the peripheral device is not received in the receiving mechanism. In this way, different detection results may be obtained, to play prompt information corresponding to the different detection results to the user, so that the user learns of different states of the peripheral device in real time.

In some implementations, the playing third prompt information if the peripheral device is not received in the receiving mechanism and is not in the connected state with the electrical connector includes: starting to accumulate first duration if the received electrical signal starts to decrease from the preset signal threshold; and playing the third prompt information if it is not detected that the peripheral device is in the connected state with the electrical connector when the first duration is greater than or equal to a first time threshold. In this way, a state of the peripheral device can be accurately detected, to accurately play prompt information to the user.

In some implementations, the playing third prompt information if the peripheral device is not received in the receiving mechanism and is not in the connected state with the electrical connector includes: starting to accumulate second duration if it is detected that the peripheral device changes from the connected state to an unconnected state with the electrical connector; and playing the third prompt information if it is not detected that the peripheral device is received in the receiving mechanism when the second duration is greater than or equal to a second time threshold. In this way, a state of the peripheral device can be accurately detected, to accurately play prompt information to the user.

In some implementations, the electronic device includes a display screen. When playing target prompt information, the method includes: displaying a target prompt pop-up window on the display screen, and displaying the target prompt information in the target prompt pop-up window according to a preset time interval and a preset quantity of times; and/or invoking a voice player, and playing the target prompt information in a voice manner according to the preset time interval and the preset quantity of times. The target prompt information includes one of the first prompt information, the second prompt information, and the third prompt information. In this way, a plurality of manners of playing the prompt information are provided, to improve user experience.

According to a fifth aspect, an embodiment of this application further provides an electronic device, including a memory and a processor. The memory stores program instructions, and when the program instructions are executed by the processor, the electronic device is enabled to perform the peripheral device state detection method according to the fourth aspect.

According to a sixth aspect, an embodiment of this application further provides a computer-readable storage medium, where the computer readable storage medium stores instructions, and when the instructions are run on a computer, the computer is enabled to perform the method according to the fourth aspect and the implementations thereof.

According to a seventh aspect, an embodiment of this application further provides a computer program product including instructions, and when the computer program product runs on a computer, the computer is enabled to perform the method according to the fourth aspect and the implementations thereof.

According to an eighth aspect, an embodiment of this application further provides a chip system, where the chip system includes a processor, configured to support the terminal system in implementing the functions related in the foregoing aspect, for example, generate or process information related in the foregoing method.

It may be understood that the electronic device, the computer-readable storage medium, the computer program product including instructions, and the chip system that are provided in the foregoing aspects are all used in the corresponding method provided above. Therefore, for beneficial effects that can be achieved by the electronic device, the computer-readable storage medium, and the computer program product, refer to the beneficial effects in the corresponding method provided above. Details are not described herein again.

### BRIEF DESCRIPTION OF DRAWINGS

To describe the technical solutions in this application more clearly, the following briefly describes the accompanying drawings required for describing the embodiments. Apparently, a person of ordinary skill in the art may still derive other drawings from these accompanying drawings without creative efforts.
FIG. 1 is a schematic structural diagram of a notebook computer;
FIG. 2 is a first schematic structural diagram of an electronic device according to an embodiment of this application;
FIG. 3 is a second schematic structural diagram of an electronic device according to an embodiment of this application;
FIG. 4 is a schematic diagram of a partial structure of a region A in FIG. 2;
FIG. 5 is a first schematic structural diagram of an electrical connector 300 according to an embodiment of this application;
FIG. 6 is a second schematic structural diagram of an electrical connector 300 according to an embodiment of this application;
FIG. 7 is a third schematic structural diagram of an electrical connector 300 according to an embodiment of this application;
FIG. 8 is a first schematic structural diagram of a peripheral device 400 according to an embodiment of this application;
FIG. 9 is a schematic structural diagram of forward assembly of a peripheral device 400 and an electrical connector 300 according to an embodiment of this application;
FIG. 10 is a schematic structural diagram of reverse assembly of a peripheral device 400 and an electrical connector 300 according to an embodiment of this application;
FIG. 11 is a first schematic diagram of a partial structure of a region B in FIG. 3;
FIG. 12 is a second schematic structural diagram of a peripheral device 400 according to an embodiment of this application;
FIG. 13 is a schematic diagram of a partial structure of a region D in FIG. 9;
FIG. 14 is a second schematic diagram of a partial structure of a region B in FIG. 3;
FIG. 15 is a schematic diagram of a partial structure of a cross section C-C in FIG. 4;
FIG. 16 is a third schematic diagram of a partial structure of a region B in FIG. 3;
FIG. 17 is a partial side view when a peripheral device 400 is connected to an electrical connector 300 according to an embodiment of this application;
FIG. 18 is a first schematic structural diagram of a second body 200 according to an embodiment of this application;
FIG. 19 is a first schematic diagram of a partial structure of a region E in FIG. 18;
FIG. 20 is a second schematic diagram of partial structure of a region E in FIG. 18;
FIG. 21 is a schematic structural diagram in which a peripheral device 400 is received in a receiving mechanism 203 according to an embodiment of this application;
FIG. 22 is a schematic diagram of a partial structure of a region F in FIG. 21;
FIG. 23 is a schematic structural diagram of a receiving chamber 500 according to an embodiment of this application;
FIG. 24 is a flowchart of a peripheral device state detection method according to an embodiment of this application;
FIG. 25 is a schematic diagram of an interface in which an electronic device plays first prompt information according to an embodiment of this application;
FIG. 26 is a schematic diagram of an interface in which an electronic device plays second prompt information according to an embodiment of this application;
FIG. 27 is a schematic diagram of an interface in which an electronic device plays third prompt information according to an embodiment of this application; and
FIG. 28 is a structural block diagram of an electronic device according to an embodiment of this application.

### DETAILED DESCRIPTION OF THE EMBODIMENTS

The following clearly describes the technical solutions in the embodiments of this application with reference to the accompanying drawings in the embodiments of this application. Apparently, the described embodiments are some rather than all of the embodiments of this application. Other embodiments obtained by a person of ordinary skill in the art based on the embodiments of this application without creative efforts shall fall within the protection scope of this application.

In descriptions of this application, the terms "first" and "second" are used merely for the purpose of description, and shall not be construed as indicating or implying relative importance or implying a quantity of indicated technical features. Therefore, a feature defined by "first", "second", and the like may explicitly or implicitly include one or more such features. In the descriptions of this application, unless otherwise stated, "a plurality of" indicates two or more.

In addition, in this application, orientation terms such as "upper" and "lower" are defined relative to the orientations in which components in the accompanying drawings are schematically placed. It should be understood that these orientation terms are relative concepts, are used for relative description and clarification, and may be correspondingly changed based on changes in the orientations in which the components are placed in the accompanying drawings.

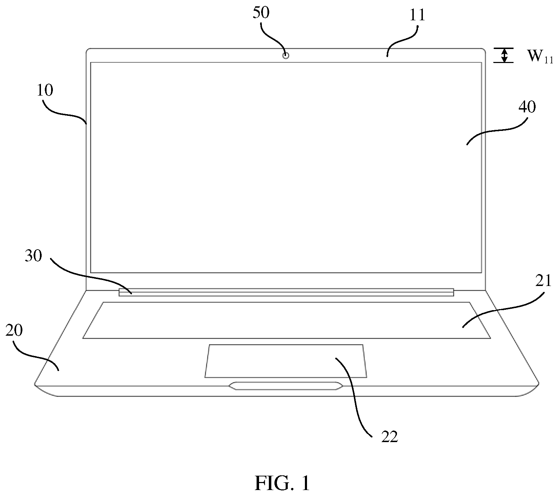

FIG. 1 is a schematic structural diagram of a notebook computer.

As shown in FIG. 1, the notebook computer includes a display 10 and a host 20, and the display 10 is rotatably connected to the host 20 through a rotation shaft 30.

The display 10 includes a front housing 11 and a screen 40. The screen 40 is configured to display an image, a video, and the like. The screen 40 may use a flexible display screen, or may use a rigid display screen. The front housing 11 faces a user side. The front housing 11 is configured to protect the screen 40. The front housing 11 may wrap around an edge of the screen 40 and a back of the screen 40.

The host 20 includes a host body (not shown in the figure), a keyboard 21, and a touch pad (touch pad) 22. The keyboard 21 and the touch pad 22 are arranged on the host body, and face the screen 40. The keyboard 21 is configured to input an instruction or data. A working mode of the touch pad 22 is used as a mouse, and a touch action (including an action such as sliding or clicking) of a finger of a user is used to control an action of a cursor on the screen 40, to perform an operation such as "cursor navigation", "selection", or "confirmation" of the mouse. It should be noted that in different working modes, the touch pad 22 may replace the mouse to control the notebook computer, or may work in cooperation with the mouse to improve portable performance of the notebook computer.

The host body includes a plurality of electronic components, and the electronic components include, but are not limited to, a processor, a memory, and the like. The host body is configured to control, according to the instruction or the data input by using the keyboard 21, the screen 40 to display an image or a video, and is further configured to control an action of the cursor on the screen 40 according to the touch action input by using the touch pad 22.

The notebook computer may be switched between an open state and a closed state by using the rotation shaft 30. When the notebook computer is in the open state, the display 10 and the host 20 form an angle greater than 0° but less than 180°. When the notebook computer is in the closed state, the display 10 covers the host 20, and a display surface of the display 10 faces a keyboard surface of the host 20.

The display 10 includes a camera 50, configured to implement a photographing function, and there may be one or more cameras 50. The camera 50 is arranged at a top location of the front housing 11 facing a user side, and a plane in which the top location is located is parallel to a plane in which the screen 40 is located. The camera 50 is integrally mounted above the screen 40, to photograph a user in front of the screen by using the camera 50.

To accommodate the camera 50, a top width W₁₁ of the front housing 11 needs to be adapted to a width of the camera 50. In this way, in the notebook computer, an edge of the front housing 11 used for wrapping the screen 40 is relatively wide, a relatively wide black border easily exists on an appearance facing the user side, aesthetics is relatively poor, and requirements of a narrow black border and a full screen cannot be implemented. Moreover, during photographing, the camera 50 cannot be moved, and can only photograph the user in front of the screen. If a shooting range needs to be changed in a scenario such as interview, for example, a picture behind the screen needs to be shot, the entire notebook computer needs to be rotated, or an additionally connected camera needs to be used for implementation, resulting in poor user experience.

To resolve the foregoing technical problem, the embodiments of this application provide an electronic device, a peripheral device, and a terminal system.

The electronic device according to the embodiments of this application includes, but is not limited to, a mobile phone, a notebook computer, a tablet computer, a laptop computer, a personal digital assistant, a wearable device, and the like. The peripheral device according to the embodiments of this application includes, but is not limited to, a camera module, a microphone, a flash, or the like. An example in which the electronic device is the notebook computer and the peripheral device is the camera module is used below for description.

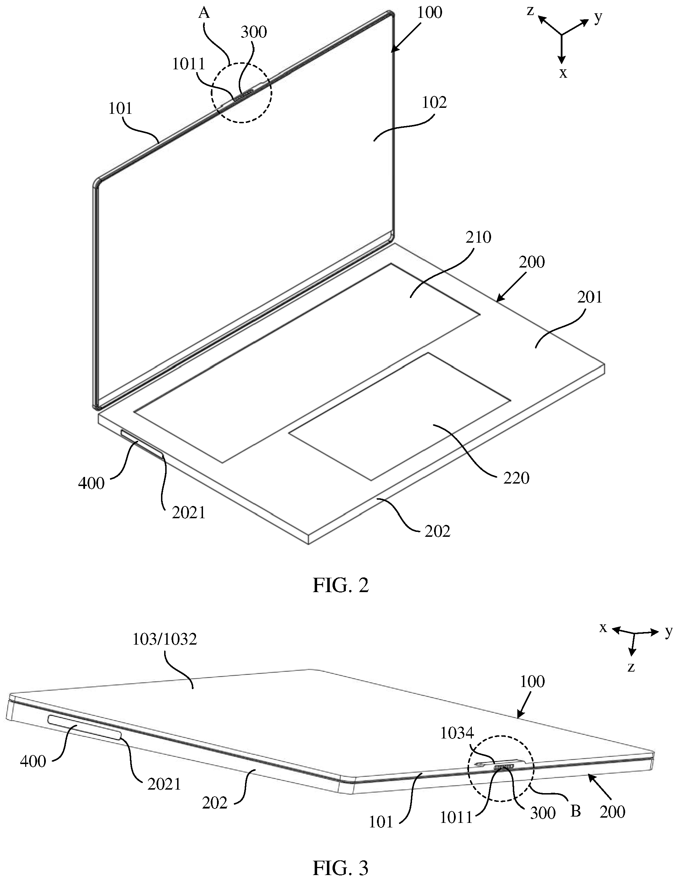

FIG. 2 is a first schematic structural diagram of an electronic device according to an embodiment of this application.

As shown in FIG. 2, in some embodiments, the electronic device may include: a first body 100, a second body 200, and an electrical connector 300.

The first body 100 may include a first housing (not shown in the figure) and a display screen 102. The first housing and the display screen 102 are fastened together. The display screen 102 is configured to display an image, a video, and the like. The display screen 102 may use a flexible display screen, or may use a rigid display screen. The first housing faces away from a user side, the first housing is configured to protect the display screen 102, and the first housing may warp around an edge of the display screen 102 and a back of the display screen 102.

The second body 200 may include a second housing (not shown in the figure), a keyboard assembly 210, a touch pad assembly 220, and the like. The keyboard assembly 210 and the touch pad assembly 220 are arranged on the second housing, and face the display screen 102. The second housing includes a plurality of electronic components, and the electronic components include, but are not limited to, a processor, a memory, and the like.

The first body 100 and the second body 200 may be connected and rotate through a rotation shaft or a hinge (not shown in the figure), so that the electronic device can be switched between an open state and a closed state. For example, the first body 100 may be used as a display side, and the second body 200 may be used as a host system side.

As shown in a state shown in FIG. 2, when the electronic device is in the open state, the first body 100 and the second body 200 form an angle greater than 0° and less than 180°.

For ease of describing locations of the components in the electronic device, in this embodiment of this application, a three-dimensional coordinate system is exemplarily established based on the electronic device, where an x-axis direction is a width direction of the electronic device, a y-axis direction is a length direction of the electronic device, and a z-axis direction is a thickness direction of the electronic device.

For example, FIG. 2 shows a three-dimensional coordinate system of the first body 100. An x-axis direction is a width direction of the first body 100, a y-axis direction is a length direction of the first body 100, and a z-axis direction is a thickness direction of the first body 100.

FIG. 3 is a second schematic structural diagram of an electronic device according to an embodiment of this application.

As shown in FIG. 3, in some embodiments, when the electronic device is in the closed state, the first body 100 covers the second body 200, and a display surface of the first body 100 faces a keyboard surface of the second body 200.

With reference to FIG. 2 and FIG. 3, in some embodiments, the first housing may include a housing body 103 and a first bezel 101. The housing body 103 may be considered as an outer housing of the first body 100, the housing body 103 faces away from the user side, and the first bezel 101 may be considered as a side of the first body 100. The housing body 103 and the first bezel 101 may be integrally formed.

The housing body 103 is arranged at a back surface of the display screen 102, and the first bezel 101 surrounds an outer edge of the housing body 103. An extension direction of the first bezel 101 is different from an extension direction of the housing body 103. For example, the extension direction of the first bezel 101 is parallel to a z axis, the extension direction of the housing body 103 is parallel to an x axis and a y axis, and the first bezel 101 is perpendicular to the housing body 103.

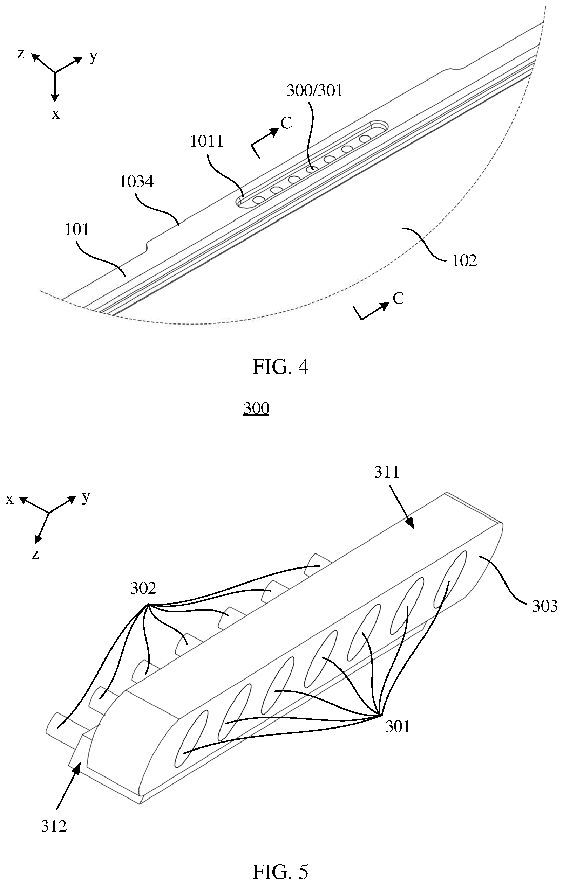

FIG. 4 is a schematic diagram of a partial structure of a region A in FIG. 2.

With reference to FIG. 2 and FIG. 4, in some embodiments, the first bezel 101 surrounds an outer edge of the display screen 102, and the extension direction of the first bezel 101 is different from an extension direction of the display screen 102.

For example, the extension direction of the first bezel 101 is parallel to the z axis, the extension direction of the display screen 102 is parallel to the x axis and the y axis, and the first bezel 101 is perpendicular to the display screen 102.

The housing body 103 and the display screen 102 are located at two opposite sides of the first bezel 101, and an edge of the housing body 103 and an edge of the display screen 102 are connected through the first bezel 101. The extension direction of the housing body 103 is the same as the extension direction of the display screen 102.

In this way, the display screen 102 is fixed by using the first bezel 101 of the first housing perpendicular to the display screen 102, and a camera does not need to be arranged at a top location of the first housing above the display screen 102. The camera is no longer built in the first body 100, so that the edge of the display screen 102 extends to an edge of the first housing, thereby implementing requirements of a full screen and a narrow black border.

In some embodiments, the electrical connector 300 is arranged on the first bezel 101. For example, the electrical connector 300 is located at the top of the first bezel 101, and the electrical connector 300 may alternatively be arranged on a left side or a right side of the first bezel 101 relative to a user. This is not limited herein. The electrical connector 300 is configured to implement an electrical connection between different electronic devices for signal transmission. For example, the electrical connector 300 may use a precision pogo-pin (pogo-pin) connector. A pogo-pin is a spring-type probe formed by three basic parts, namely, a spring pin, a spring, and a pin barrel, through riveting and pre-pressing by a precise instrument.

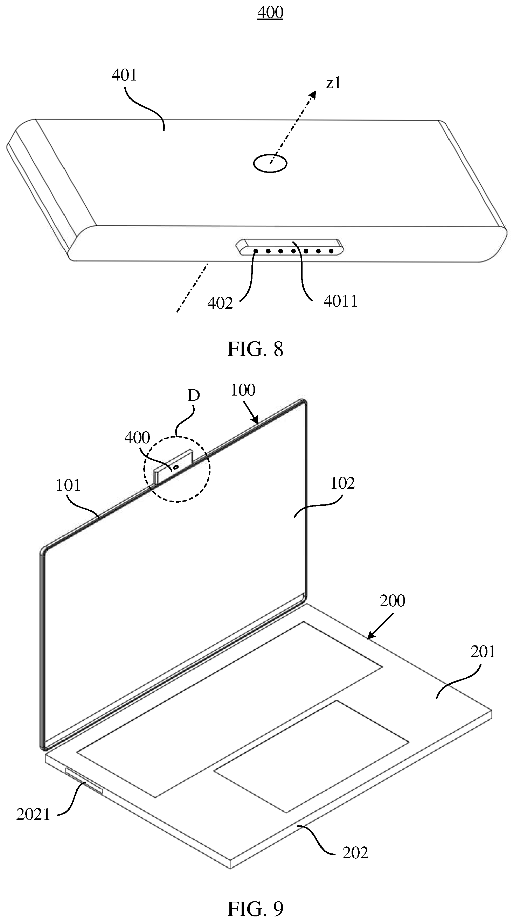

The electrical connector 300 may include a plurality of first terminals 301. The electrical connector 300 is located in the first body 100, and the plurality of first terminals 301 of the electrical connector 300 are exposed on the first bezel 101. The electrical connector 300 is configured to detachably connect to a peripheral device 400, so that the plurality of first terminals 301 are electrically connected to a plurality of second terminals 402 of the peripheral device 400. For a structure of the peripheral device 400, refer to content shown in FIG. 8, and details are not described herein.

To implement an electrical connection, structures of the first terminal 301 and the second terminal 402 are in a male-female pairing relationship. If the first terminal 301 is a pop-up pin, the second terminal 402 is a metal end surface. If the first terminal 301 is a metal end surface, the second terminal 402 is a pop-up pin. An example in which the first terminal 301 is the metal end surface, and the second terminal 402 is the pop-up pin is used for description in this specification.

For example, the peripheral device 400 is a camera module. The camera module is detachably and electrically connected to the electrical connector 300, so that the camera module is no longer built in the first body 100, and requirements of a narrow black border of the first housing and a full screen of the display screen 102 can be implemented. Because extension directions of the first bezel 101 and the display screen 102 are different, the camera module may be arranged in a forward manner to shoot a picture in front of a screen, or may be arranged in a reverse manner to shoot a picture behind the screen. In this way, a shooting range of the camera module may be changed to shoot pictures of different view angles, to adapt to a plurality of scenarios and achieve good user experience.

According to the electronic device provided in this embodiment of this application, the first bezel 101 surrounds the outer edge of the display screen 102, and the extension direction of the first bezel 101 is different from the extension direction of the display screen 102. The electrical connector 300 is located on the first bezel 101, and the plurality of first terminals 301 of the electrical connector 300 are exposed on the first bezel 101, so that the electrical connector 300 is detachably connected to the peripheral device. In this way, the peripheral device is located at the top of the first body 100, and the peripheral device may be electrically connected to the electrical connector 300 in a forward or reverse manner, to adapt to different application scenarios and improve user experience. In addition, the peripheral device does not need to be built in the electronic device, and the peripheral device 400 does not occupy space at an edge of the front housing, so that a configuration of a front housing structure (the front housing 11 shown in FIG. 1) is canceled for the first housing, thereby implementing the requirements of the full screen and the narrow black border of the electronic device.

Referring to FIG. 4 again, in some embodiments, a mounting slot 1011 is provided on the first bezel 101, and the mounting slot 1011 is configured to accommodate the plurality of first terminals 301 of the electrical connector 300.

The plurality of first terminals 301 are exposed in the mounting slot 1011. There is a particular distance between the plurality of first terminals 301 and a surface of the first bezel 101 in the x-axis direction, and the distance may be considered as a depth of the mounting slot 1011.

The mounting slot 1011 is configured to enable at least a part of the peripheral device 400 to be detachably embedded in the mounting slot 1011, so that the plurality of second terminals of the peripheral device 400 are electrically connected to the plurality of first terminals 301 of the electrical connector 300.

In this way, the mounting slot 1011 may play a role of mounting and positioning. The second terminal 402 of the peripheral device 400 is embedded in the mounting slot 1011. Movement of the peripheral device 400 in the y-axis direction and the z-axis direction may be limited by using the mounting slot 1011 on the first bezel 101, thereby improving stability of the peripheral device 400 and the electrical connector 300.

FIG. 5 is a first schematic structural diagram of an electrical connector 300 according to an embodiment of this application.

As shown in FIG. 5, in some embodiments, the electrical connector 300 may include a metal medium and an insulating member 303. The insulating member 303 wraps an outer side of the metal medium. The insulating member 303 may be made of an insulating material such as plastic. The insulating member 303 is configured to insulate the metal medium from the first housing. The metal medium may be made of a conductive material such as copper.

The electrical connector 300 further includes a plurality of cables 302, and the metal medium is configured to form the plurality of first terminals 301 and the plurality of cables 302.

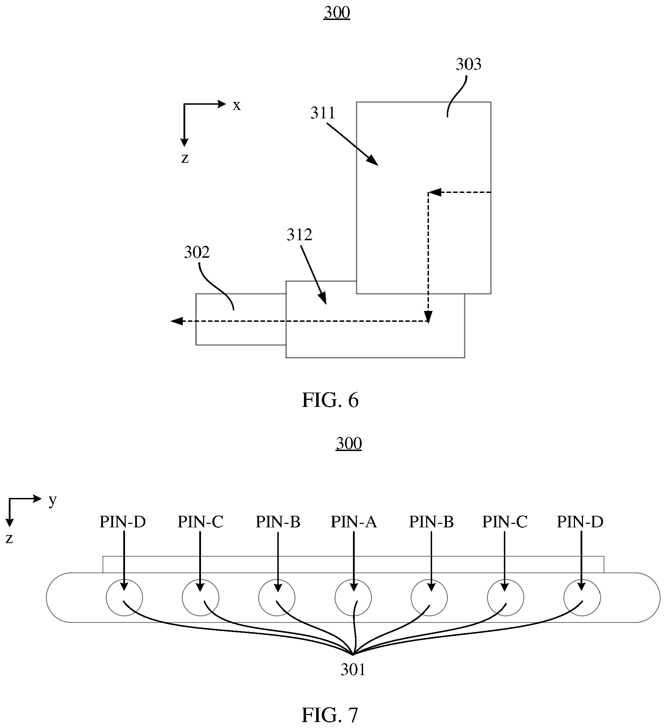

FIG. 6 is a second schematic structural diagram of an electrical connector 300 according to an embodiment of this application. FIG. 6 shows a side view structure of the electrical connector 300.

As shown in FIG. 6, in some embodiments, the electrical connector 300 may include a connection portion 311 and a routing portion 312. The routing portion 312 and the connection portion 311 are staggered, to adapt to a structure of the first housing. The connection part 311 is configured to connect to the peripheral device 400, and the routing portion 312 is configured to transmit a signal into the electronic device.

With reference to FIG. 5 and FIG. 6, in some embodiments, a plurality of metal end surfaces of the metal medium are exposed from one end surface of the connection portion 311, to form the plurality of first terminals 301. The metal medium is then routed from the connection portion 311 along the z axis toward the routing portion 312 located on a side of the connection portion 311, and is then routed in the routing portion 312 in the x-axis direction routing. To facilitate a connection between the electrical connector 300 and a system main board in the electronic device, the metal medium may pass through an end surface of the routing portion 312, to form the plurality of cables 302, and the plurality of cables 302 may continue to extend in the x-axis direction. The end surface of the connection portion 311 that exposes the first terminal 301 may be parallel the end surface of the routing portion 312 that exposes the cable 302. In this way, a routing direction may be changed.

The plurality of cables 302 is in a one-to-one correspondence with the plurality of first terminals 301, and a quantity of cables 302 is the same as a quantity of first terminals 301. In this way, when the electrical connector 300 is electrically connected to the plurality of second terminals 402 of the peripheral device 400 through the plurality of first terminals 301 to transmit signals, the signals are correspondingly transmitted to the plurality of cables 302 through the plurality of first terminals 301, and finally all the signals are transmitted to the system main board through the plurality of cables 302, thereby avoiding signal loss.

It may be understood that a direction indicated by a dashed arrow shown in FIG. 6 may be a routing direction of the metal medium, or may be a signal transmission direction in which the peripheral device 400 transmits a signal to the electronic device through the electrical connector 300.

FIG. 7 is a third schematic structural diagram of an electrical connector 300 according to an embodiment of this application.

With reference to FIG. 4 and FIG. 7, in some embodiments, in the electrical connector 300, the plurality of first terminals 301 are distributed at equal intervals in a length direction (the y-axis direction) of the first bezel 101. Similarly, the plurality of second terminals of the peripheral device are distributed at equal intervals in a length direction of the peripheral device 400 in a one-to-one correspondence with the plurality of first terminals 301. In this way, an electrical connection between the second terminal 402 of the peripheral device 400 and the first terminal 301 of the electrical connector 300 can be conveniently implemented.

There are at least 5 first terminals 301, and different first terminals 301 may have different terminal definitions. The terminal definition is used to describe a function of each first terminal 301. The terminal definition may include, but is not limited to, power supply, signal transmission, audio transmission, video transmission, grounding, and the like.

Terminal definitions of the plurality of first terminals 301 are arranged in a centrally symmetrical manner. For example, in the y-axis direction, a terminal definition of a first terminal 301 located in the middle is PIN-A. Terminal definitions of first terminals 301 on two sides of PIN-A are PIN-B. A terminal definition of a first terminal 301 that is adjacent to each PIN-B and far away from PIN-A is PIN-C. A terminal definition of a first terminal 301 that is adjacent to each PIN-C and far away from PIN-B is PIN-D. PIN-A, PIN-B, PIN-C, and PIN-D are one of the power supply, the signal transmission, the audio transmission, the video transmission, the grounding, and the like, and PIN-A, PIN-B, PIN-C, and PIN-D are different.

In some embodiments, a terminal definition of each first terminal 301 may be preconfigured to be centrally symmetric. In another embodiment, a switching switch may be configured in the electronic device, and the terminal definition of each first terminal 301 is switched to be centrally symmetric according to the switching switch.

FIG. 8 is a first schematic structural diagram of a peripheral device 400 according to an embodiment of this application.

As shown in FIG. 8, in some embodiments, the peripheral device 400 may include a device body 401 and the plurality of second terminals 402.

A butting portion 4011 is arranged at one end of the device body 401, and the butting portion 4011 protrudes toward an external environment relative to the device body 401. The plurality of second terminals 402 are located in the butting portion 4011, so that the plurality of second terminals 402 protrude toward the external environment relative to the device body 401. For example, the second terminal 402 may be a pin. The device body 401 is configured to detachably connect to the electrical connector 300 of the electronic device, so that the plurality of second terminals 402 are electrically connected to the plurality of first terminals 301 of the electrical connector 300.

A size of the butting portion 4011 matches a size of the mounting slot 1011 on the first bezel 101, so that the butting portion 4011 is embedded in the mounting slot 1011, thereby improving stability of the peripheral device 400 and the first bezel 101. Moreover, terminal definitions of the plurality of second terminals 402 of the peripheral device 400 are also arranged in a centrally symmetrical manner, and are in a one-to-one correspondence with the terminal definitions of the plurality of first terminals 301 of the electrical connector 300. In this way, an electrical connection between the second terminal 402 of the peripheral device 400 and the first terminal 301 of the electrical connector 300 can be easily implemented, so that the peripheral device 400 is connected to the electrical connector 300 in a forward manner and a reverse manner.

An example in which the peripheral device 400 is a camera module is used. A dashed arrow shown in FIG. 8 is a lens optical axis z1 of the camera module. The second terminal 402 is not arranged on an end surface of the device body 401 in which a lens (not shown in the figure) is located, and the second terminal 402 is arranged on an end surface of the device body 401 adjacent to the end surface in which the lens is located. A protruding direction of the second terminal 402 relative to the device body 401 is perpendicular to the lens optical axis z1 of the camera module, so that after the camera module is connected to the electrical connector 300, a picture can be shot by using the lens of the camera module.

With reference to the content shown in FIG. 4 and FIG. 8, when the camera module is connected to the electrical connector 300, the butting portion 4011 of the camera module is embedded in the mounting slot 1011 in the first body 100, and the plurality of second terminals 402 of the camera module are in a one-to-one correspondence with the plurality of first terminals 301 of the electrical connector 300 and the terminal definitions are also in a one-to-one correspondence, to implement the electrical connection. The device body 401 of the camera module protrudes relative to the first bezel 101, and the lens optical axis z1 of the camera module is not blocked by the first body 100. The lens optical axis z1 of the camera module is perpendicular to an axis (the x-axis direction) of the mounting slot 1011, and the lens optical axis z1 of the camera module is parallel to the z-axis direction.

In this embodiment of this application, the plurality of first terminals 301 of the electrical connector 300 are distributed at equal intervals in the y-axis direction, and the terminal definitions of the plurality of first terminals 301 are centrally symmetric in the z-axis direction. The plurality of second terminals 402 of the peripheral device 400 are also distributed at equal intervals. Terminal definitions of the plurality of second terminals 402 are centrally symmetric. In addition, distances between the plurality of second terminals 402 are equal to distances between a plurality of first terminals 301. The terminal definitions of the plurality of second terminals 402 are in a one-to-one correspondence with the terminal definitions of the plurality of first terminals 301. In this way, when the peripheral device 400 is electrically connected to the electronic device, the peripheral device 400 and the electrical connector 300 may be electrically connected in a forward manner or a reverse manner, to meet different use requirements and improve user experience.

FIG. 9 is a schematic structural diagram of a forward structure of a peripheral device 400 and an electrical connector 300 according to an embodiment of this application.

As shown in FIG. 9, in some embodiments, the camera module is mounted on the electrical connector 300 in a forward manner, and the lens of the camera module faces a user side, to shoot a picture in front of the screen.

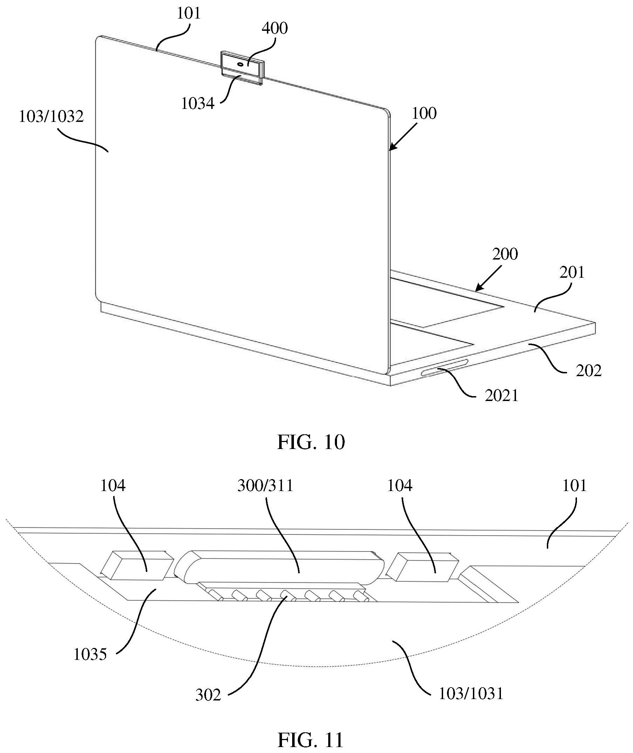

FIG. 10 is a schematic diagram of a reverse structure of a peripheral device 400 and an electrical connector 300 according to an embodiment of this application.

As shown in FIG. 10, in some embodiments, the camera module is mounted on the electrical connector 300 in a reverse manner, and the lens of the camera module faces the back of the screen, to shoot a picture behind the screen.

In this way, the camera module is detachably mounted on the electrical connector 300 in the forward manner or the reverse manner, so that a shooting range of the camera module can be changed, to shoot pictures of different view angles.

FIG. 11 is a first schematic diagram of a partial structure of a region B in FIG. 3. A structure of the display screen 102 is not shown in FIG. 11. FIG. 11 shows a structure inside the region B in FIG. 3 at another view angle.

As shown in FIG. 11, in some embodiments, the first body 100 may further include at least one first magnetic body 104. The at least one first magnetic body 104 is located at an inner side of the first bezel 101 and is adjacent to the electrical connector 300. The first magnetic body 104 is adjacent to the mounting slot 1011.

The first magnetic body 104 is configured to absorb the peripheral device 400, to improve stability of the peripheral device 400 and the first body 100. The first magnetic body 104 may be a magnet, an electromagnet, a permanent magnet, or the like.

For example, there may be two first magnetic bodies 104. The two first magnetic bodies 104 are respectively located on two sides of the electrical connector 300, and there is a particular distance between each first magnetic body 104 and the electrical connector 300, to avoid mutual interference.

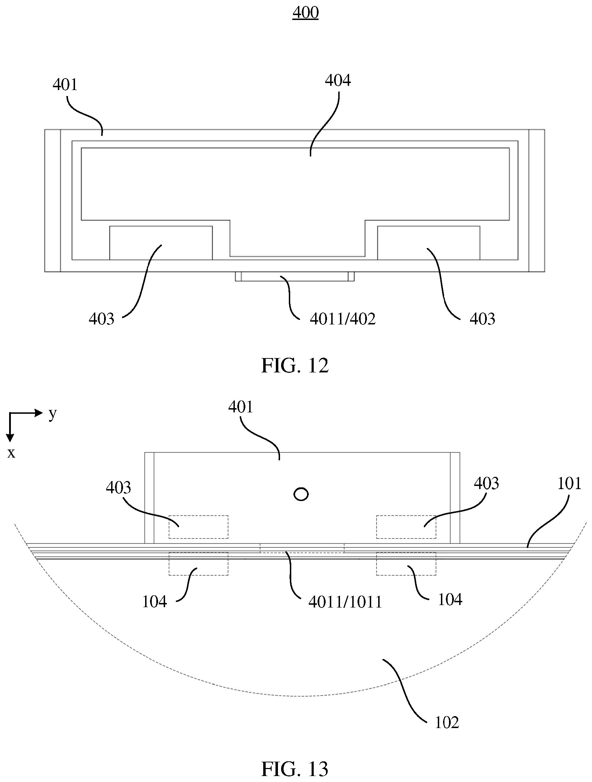

FIG. 12 is a second schematic structural diagram of a peripheral device 400 according to an embodiment of this application. FIG. 12 shows an internal structure of the peripheral device 400.

As shown in FIG. 12, in some embodiments, the device body 401 of the peripheral device 400 may include a circuit board 404 and at least one second magnetic body 403.

The at least one second magnetic body 403 is located at one end of the device body 401 on which the plurality of second terminals 402 are arranged, and the at least one second magnetic body 403 is adjacent to the plurality of second terminals 402. One end of the circuit board 404 extends to one end of the device body 401 on which the plurality of second terminals 402 are arranged, and the circuit board 404 is electrically connected to the second terminals 402.

The second magnetic body 403 is configured to attract the first magnetic body 104 in the first body 100, to improve stability of the peripheral device 400 and the first body 100. The second magnetic body 403 may be a magnet, an electromagnet, a permanent magnet, or the like.

For example, there may be two second magnetic bodies 403. The two second magnetic bodies 403 are respectively located at two sides of the butting portion 4011, and there is a particular distance between each second magnetic body 403 and the butting portion 4011. An extension end of the circuit board 404 is located between the two second magnetic bodies 403.

FIG. 13 is a schematic diagram of a partial structure of a region D in FIG. 9.

As shown in FIG. 13, in some embodiments, a distance between the two first magnetic bodies 104 arranged on the inner side of the first bezel 101 is equal to a distance between the two second magnetic bodies 403 arranged inside the device body 401, and a distance between the first magnetic body 104 and the mounting slot 1011 is equal to a distance between the second magnetic body 403 and the butting portion 4011.

Magnetism of the first magnetic body 104 is opposite to that of the second magnetic body 403. When the peripheral device is connected to the electrical connector 300, the butting portion 4011 of the peripheral device 400 is embedded in the mounting slot 1011 in the first body 100, the plurality of second terminals 402 of the peripheral device 400 are in a one-to-one correspondence with and electrically connected to the plurality of first terminals 301 of the electrical connector 300, and the two second magnetic bodies 403 of the peripheral device 400 are in a one-to-one correspondence with and attracted to the two first magnetic bodies 104 on the inner side of the first bezel 101.

In this way, when the peripheral device 400 is connected to the electrical connector 300, the first magnetic body 104 is attracted to the second magnetic body 403, so that stability of the peripheral device 400 and the first bezel 101 can be further improved, thereby improving stability of the electrical connection between the peripheral device 400 and the electrical connector 300.

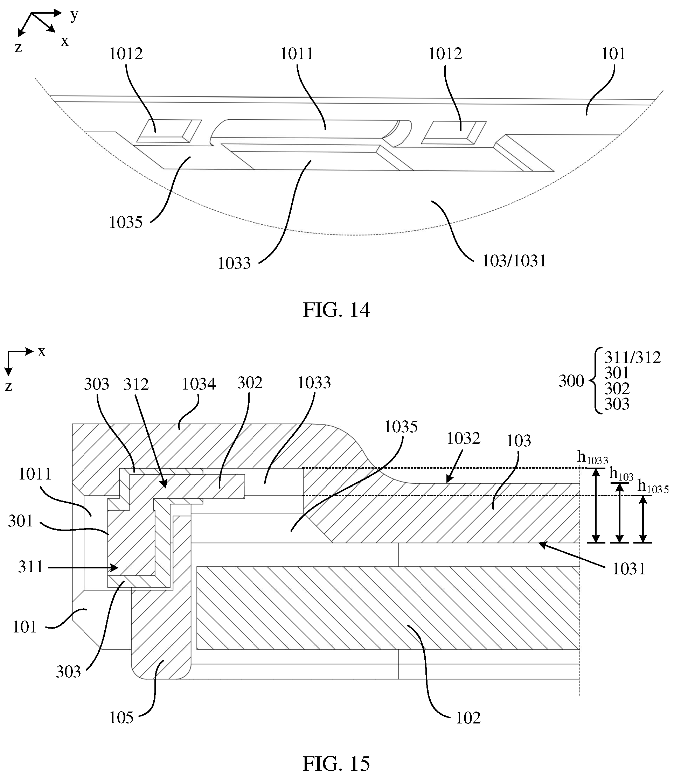

FIG. 14 is a second schematic diagram of a partial structure of a region B in FIG. 3. FIG. 14 shows only an internal structure of the first housing.

As shown in FIG. 14, in some embodiments, an inner surface of the first bezel 101 includes at least one first receiving groove 1012.

The at least one first receiving groove 1012 is adjacent to the mounting slot 1011, and the at least one first magnetic body 104 is arranged in the first receiving groove 1012 in a one-to-one correspondence.

A quantity of first receiving grooves 1012 is the same as a quantity of first magnetic bodies 104, so that the first magnetic body 104 is received by using the first receiving groove 1012, thereby avoiding occupation of inner space of the first body 100 by the first magnetic body 104, and improving stability of the first magnetic body and the first bezel 101.

The mounting slot 1011 extends through an inner surface and an outer surface of the first bezel 101, and the mounting slot 1011 may be considered as a through hole. The first receiving groove 1012 may be a blind groove. The first magnetic body 104 and the second magnetic body 403 may be attracted to each other at an interval of a wall thickness of the first receiving groove 1012. The first receiving groove 1012 may alternatively be a through hole. In this way, the first magnetic body 104 is exposed on the outer surface of the first bezel 101, so that the first magnetic body 104 and the second magnetic body 403 can be directly attracted to each other, thereby improving an attraction force.

In some embodiments, the housing body 103 may include a first housing surface 1031, and the first housing surface 1031 faces the display screen 102.

The first housing surface 1031 may include a second receiving groove 1033 and a third receiving groove 1035. The second receiving groove 1033 is located in the third receiving groove 1035. The second receiving groove 1033 is adjacent to the mounting slot 1011, and the third receiving groove 1035 may communicate with the mounting slot 1011.

In the y-axis direction, a length of the third receiving groove 1035 is greater than a length of the second receiving groove 1033, and the length of the third receiving groove 1035 is greater than a distance between two first receiving grooves 1012, so that the at least one first receiving groove 1012 is located in a length range of the third receiving groove 1035.

FIG. 15 is a schematic diagram of a partial structure of a cross section C-C in FIG. 4.

As shown in FIG. 15, in some embodiments, the second receiving groove 1033 is formed by the first housing surface 1031 being recessed toward the inside of the housing body 103 by a depth h₁₀₃₃, and the third receiving groove 1035 is formed by the first housing surface 1031 being recessed toward the inside of the housing body 103 by a depth h₁₀₃₅. The depth h₁₀₃₅ of the third receiving groove 1035 is less than the depth h₁₀₃₃ of the second receiving groove 1033, and the depth h₁₀₃₅ of the third receiving groove 1035 is less than a thickness h₁₀₃ of the housing body 103.

The second receiving groove 1033 is configured to provide routing space for the plurality of cables 302. The electrical connector 300 has a structure in which the connection portion 311 and the routing portion 312 are staggered. A part of the connection portion 311 is embedded in the mounting slot 1011, so that the first terminal 301 is exposed from the mounting slot 1011, and the other part of the connection portion 311 protrudes from the inner surface of the first bezel 101. The routing portion 312 is adjacent to the housing body 103 and is located in the routing space provided by the second receiving groove 1033, so that the cable 302 is routed in the second receiving groove 1033. In other words, during layout of the electrical connector 300 is laid out, the metal medium is routed from the connection portion 311 along the z axis toward the housing body 103 to the second receiving groove 1033, and then a routing direction is changed and the metal medium is routed along an inner surface of the housing body 103 in the x-axis direction, to form the routing portion 312. The cable 302 passes through an end surface of the routing portion 312 and continues to be routed in the x-axis direction.

In this way, the routing direction in the electrical connector 300 may be changed, so that a cable outlet location of the cable 302 is far away from the display screen 102, thereby avoiding a case that the cable outlet location of the cable 302 hinders extension of the display screen 102. The cable outlet location of the cable 302 avoids the display screen 102, so that the display screen 102 can abut against the first bezel 101, thereby reducing a size of a black border of the display screen 102 and even eliminating the black border, achieving requirements of a full screen and a narrow black border, and improving an aesthetic effect.

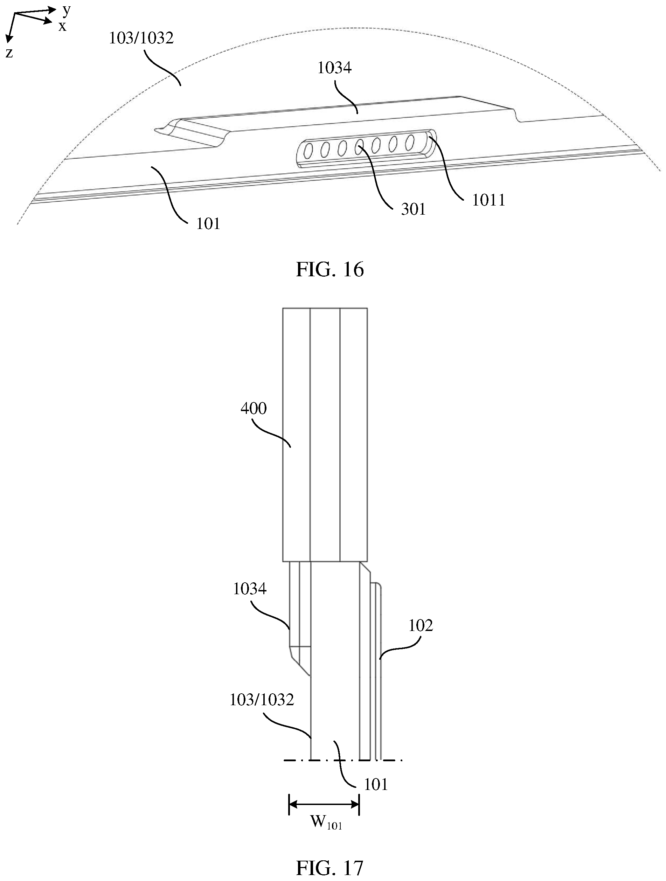

FIG. 16 is a third schematic diagram of a partial structure of a region B in FIG. 3; FIG. 16 shows only a partial structure of the first body 100.

With reference to FIG. 15 and FIG. 16, in some embodiments, the housing body 103 may further include a second housing surface 1032. The second housing surface 1032 faces an external environment and the second housing surface 1032 faces away from the first housing surface 1031.

In order to facilitate providing a routing space to the electrical connector 300, the depth h₁₀₃₃ of the second receiving groove 1033 is greater than the thickness h₁₀₃ of the housing body 103, so that a part of the second housing surface 1032 adjacent to the mounting slot 1011 forms a convex hull structure 1034 protruding toward an external environment.

Projection regions of the electrical connector 300 and the at least one first magnetic body 104 on the second housing surface 1032 are located in a projection region of the convex hull structure 1034 on the second housing surface 1032. In other words, in the y-axis direction, a length of the convex hull structure 1034 is greater than or equal to a length of the third receiving groove 1035. In the x-axis direction, a width of the convex hull structure 1034 is greater than or equal to a width of the third receiving groove 1035. A protruding height of the convex hull structure 1034 relative to the second housing surface 1032 is related to the depth of the second receiving groove 1033 and a wall thickness of the convex hull structure 1034.

In this way, the convex hull structure 1034 forms a local convex hull at a location of the housing body 103 corresponding to the electrical connector 300. The convex hull structure 1034 partially protrudes relative to the first housing in the z-axis direction, so that a thickness of the remaining location of the first body 100 is thin, and the appearance effect of the entire device is not affected. In addition, components located in the convex hull structure 1034 are accommodated by using the third receiving groove 1035, so that impact on layout of other components in the first body 100 caused by the components can be avoided.

FIG. 17 is a partial side view when a peripheral device 400 is connected to an electrical connector 300 according to an embodiment of this application.

As shown in FIG. 17, in some embodiments, the convex hull structure 1034 protrudes relative to the housing body 103, and a local width W₁₀₁ of the first bezel 101 may be increased. A location at which the local width is increased may be used as a bearing surface.

In this way, when the peripheral device 400 is connected to the electrical connector 300, the peripheral device 400 is supported by using the bearing surface, so that stability of the peripheral device 400 and the first bezel 101 can be improved, and stability of an electrical connection between the peripheral device 400 and the electrical connector 300 can be further improved.

Referring to FIG. 15 again, in some embodiments, the first body 100 may further include a buffer medium 105. For example, the buffer medium 105 may be made of a soft adhesive material, to achieve a buffering function.

The buffer medium 105 is located between the first bezel 101 and the display screen 102, and the buffer medium 105 may surround a peripheral edge of the display screen 102. In this way, local stress concentration caused by the display screen 102 being in direct contact with the first bezel 101 can be avoided, thereby avoiding damage to the display screen 102.

At least a part of the buffer medium 105 extends along a back side of the first terminal 301, and approaches the cable 302. At least a part of the buffer medium 105 extends along a back side of the connection portion 311, and approaches the routing portion 312. In this way, a case that an end portion of the display screen 102 is in contact with a back side of the electrical connector 300 to generate local stress concentration can be avoided, thereby avoiding damage to the display screen 102.

In some embodiments, when the electrical connector 300 is connected to the peripheral device 400, a corresponding electrical signal may be generated. The electrical signal is sent to the system main board through the cable 302 of the electrical connector 300. The system main board may be configured in the second body 200. When the system main board receives the electrical signal, it may indicate that the peripheral device 400 is in a connected state with the electrical connector 300. In this way, it may be detected, depending on whether the system main board receives the electrical signal, whether the peripheral device 400 is in the connected state with the electrical connector 300.

In some embodiments, the first body 100 may further include a first sensing device (not shown in the figure). The first sensing device is located at the inner side of the first bezel 101 and is adjacent to the at least one first magnetic body 104. The first sensing device is configured to detect whether the peripheral device 400 is in the connected state with the electrical connector 300.

In this way, according to a detection result of whether the peripheral device 400 is in the connected state with the electrical connector 300, the electronic device may play corresponding prompt information to a user, so that the user can learn of a state of the peripheral device 400 in time, thereby avoiding loss of the peripheral device 400.

It should be noted that, for the process of detecting, by using the first sensing device, whether the peripheral device 400 is in the connected state with the electrical connector 300, refer to a process of detecting, by using a second sensing device 204, whether the peripheral device is received in a receiving mechanism 203 provided in the following embodiments. Details are not described herein.

Referring to FIG. 2 again, in some embodiments, the second body 200 may include a second housing. The second housing may include a surface housing 201, a second bezel 202, and a rear housing (not shown in the figure). The surface housing 201 faces the display screen 102, and the keyboard assembly 210 and the touch pad assembly 220 are both arranged on the surface housing 201. The rear housing faces away from the display screen 102, the surface housing 201 and the rear housing are located at two opposite sides of the second bezel 202, and edges of the surface housing 201 and the rear housing are connected through the second bezel 202.

An extension direction of the second bezel 202 is different from an extension direction of the surface housing 201, and the second bezel 202 may be considered as a side edge of the second body 200. With reference to FIG. 3, when the electronic device is closed, the extension direction of the second bezel 202 is the same as the extension direction of the first bezel 101.

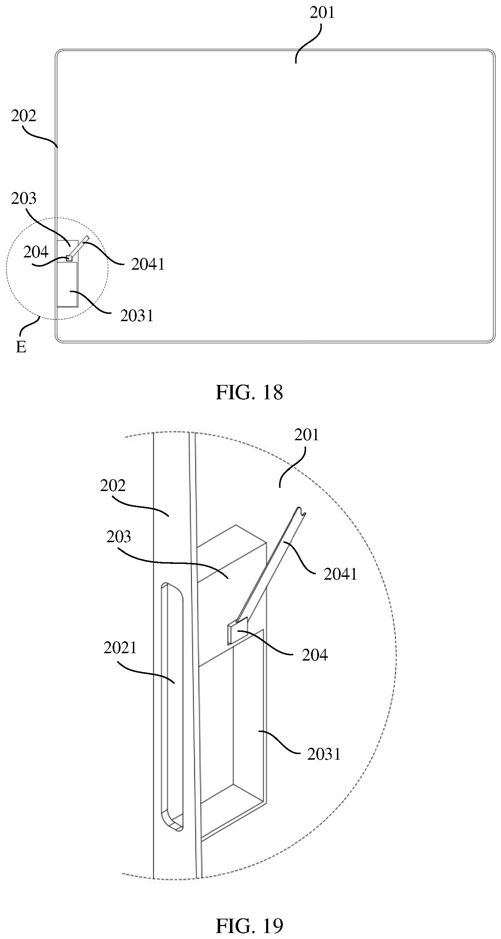

FIG. 18 is a first schematic structural diagram of a second body 200 according to an embodiment of this application. FIG. 18 is a bottom view of the second body 200, and does not show a structure of the rear housing.

As shown in FIG. 18, in some embodiments, a receiving mechanism 203 is arranged inside the second body 200, and the receiving mechanism 203 is adjacent to the second bezel 202.

The receiving mechanism 203 provides a cavity, configured to receive an unused peripheral device, to avoid loss of a detachable peripheral device.

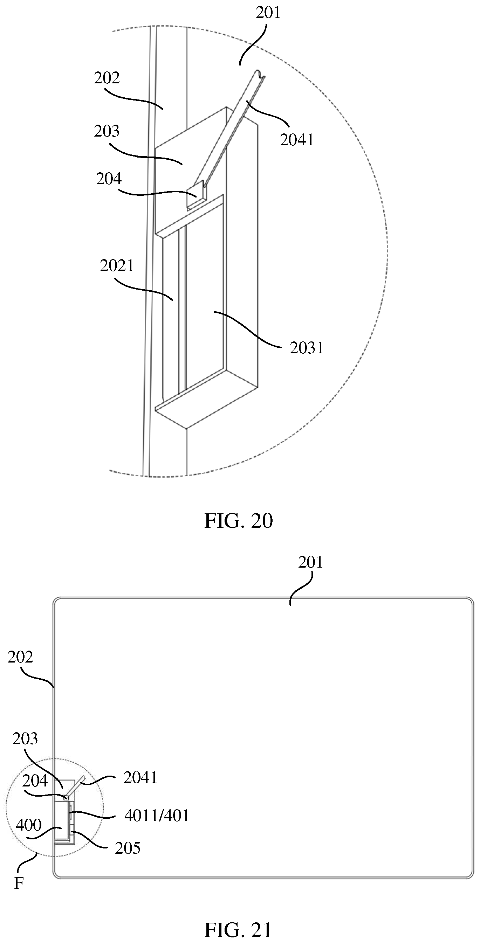

FIG. 19 is a first schematic diagram of a partial structural of a region E in FIG. 18. FIG. 20 is a second schematic diagram of a partial structure of a region E in FIG. 18. FIG. 19 and FIG. 20 show structures of different view angles.

With reference to FIG. 19 and FIG. 20, in some embodiments, a receiving hole 2021 is provided on the second bezel 202. The receiving hole 2021 is adjacent to and communicates with the receiving mechanism 203, so that the peripheral device 400 is received in the receiving mechanism 203 through the receiving hole 2021.

In some embodiments, the second body 200 may further include a second sensing device 204. The second sensing device 204 is arranged in the receiving mechanism 203. The second sensing device 204 is configured to detect whether the peripheral device is received in the receiving mechanism 203.

A system main board is configured in the second body 200, and the second sensing device 204 is connected to the system main board through routing 2041.

For example, the second sensing device 204 may be a Hall device. The Hall device is configured to: detect whether the receiving mechanism 203 has magnetism, and generate an electrical signal corresponding to a magnetic field strength around the receiving mechanism 203. The Hall device sends the electrical signal to the system main board, so that the system main board detects whether the peripheral device 400 is received in the receiving mechanism 203.

It should be noted that, for the process in which the system main board detects whether the peripheral device is received in the receiving mechanism 203, refer to a peripheral device state detection method provided in the following embodiments. Working principles of the first sensing device and the second sensing device 204 provided in the foregoing embodiments are the same, and details are not described herein again.

In some embodiments, the receiving mechanism 203 includes an opening 2031, and the second sensing device 204 is adjacent to the opening 2031. In this way, the second sensing device 204 can conveniently detect magnetism in the receiving mechanism 203, thereby improving detection accuracy.

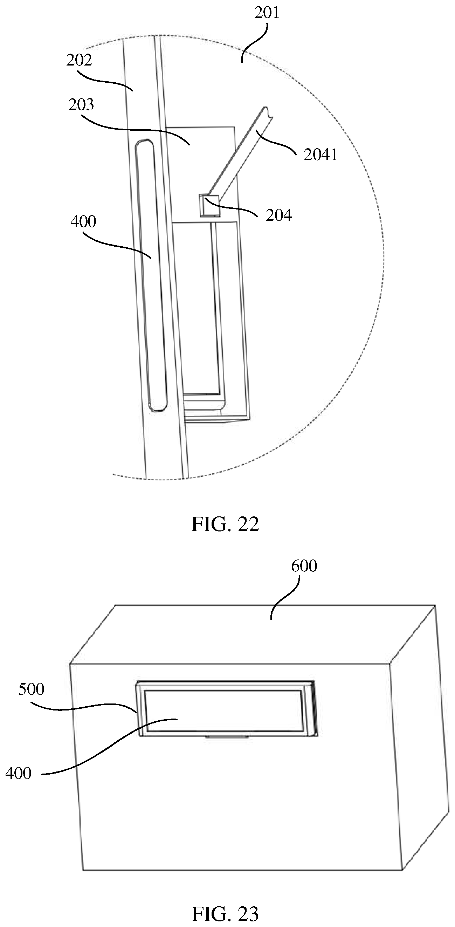

FIG. 21 is a schematic structural diagram in which a peripheral device 400 is received in a receiving mechanism 203 according to an embodiment of this application. FIG. 22 is a schematic diagram of a partial structure of a region F in FIG. 21. FIG. 22 shows structures of different view angles.

With reference to FIG. 21 and FIG. 22, in some embodiments, the peripheral device 400 enters the cavity of the receiving mechanism 203 through the receiving hole 2021, and the butting portion 4011 of the peripheral device 400 faces the inside of the receiving mechanism 203.

In some embodiments, the second body 200 may further include at least one third magnetic body 205. The at least one third magnetic body 205 is spaced apart and located on a surface of the receiving mechanism 203 facing the receiving hole 2021. The third magnetic body 205 is configured to absorb the peripheral device 400, so that the peripheral device 400 is fixed in the receiving mechanism 203. For example, the third magnetic body 205 may be a magnet, an electromagnet, a permanent magnet, or the like.

When the peripheral device 400 is received in the receiving mechanism 203, the third magnetic body 205 is located on a side of the butting portion 4011. Magnetism of the third magnetic body 205 is opposite to that of the second magnetic body 403 in the peripheral device 400. The third magnetic body 205 and the second magnetic body 403 are attracted to each other, to improve stability of the peripheral device 400 and the receiving mechanism 203, and further avoid loss of the peripheral device 400 due to falling out of the receiving mechanism 203.

In some embodiments, the receiving mechanism 203 may further include at least one spring fastener (not shown in the figure). The at least one spring fastener is located on a surface of the receiving mechanism 203 facing the receiving hole 2021. When both the spring fastener and the third magnetic body 205 are arranged in the receiving mechanism 203, the spring fastener and the third magnetic body 205 may be arranged in parallel and spaced apart.

When the peripheral device 400 is received in the receiving mechanism 203, the at least one spring fastener is configured to: be distributed on two sides of the second terminal 402 of the peripheral device 400, be in elastic contact with the peripheral device 400, and, eject the peripheral device 400 from the receiving mechanism 203 when the peripheral device 400 is pressed externally. In this way, the peripheral device 400 can be conveniently taken out from the receiving mechanism 203.

In some embodiments, a size of the receiving hole 2021 on the second bezel 202 may be increased. In this way, when the spring fastener is not arranged in the receiving mechanism 203, the peripheral device 400 may be manually taken out from the receiving mechanism 203. In another embodiment, the peripheral device 400 may be taken out from the second body 200 in another manner. This is not limited herein.

In some embodiments, an embodiment of this application further provides a terminal system, including: the electronic device provided in any one of the foregoing embodiments, and a peripheral device 400. The peripheral device 400 is electrically connected to an electrical connector 300 of the electronic device, or the peripheral device 400 is received in a receiving mechanism 203 of the electronic device.

According to the terminal system provided in this embodiment of this application, the peripheral device 400 is detachably connected to the electronic device. During use, the peripheral device 400 is electrically connected to the electrical connector 300 of the electronic device. When not in use, the peripheral device 400 is received in the receiving mechanism 203 provided by the electronic device, which is very convenient to use.

FIG. 23 is a schematic structural diagram of a receiving chamber 500 according to an embodiment of this application.

As shown in FIG. 23, in some embodiments, the terminal system may further include a receiving chamber 500, and the receiving chamber 500 is configured to receive the peripheral device 400.

The receiving chamber 500 includes a third sensing device (not shown in the figure), and the third sensing device is configured to detect whether the peripheral device 400 is received in the receiving chamber 500. For a process of detecting, by using the third sensing device, whether the peripheral device 400 is received in the receiving chamber 500, refer to the process of detecting, by using the second sensing device 204, whether the peripheral device 400 is received in the receiving mechanism 203. Details are not described herein again.

The receiving chamber 500 may be configured in a component 600 of the electronic device. For example, the component 600 includes, but is not limited to, a mouse, a charger, and the like. For a manner of receiving the peripheral device 400 in the receiving chamber 500, refer to any manner of receiving the peripheral device 400 in the receiving mechanism 203. Details are not described herein again.

In this way, the peripheral device 400 is received in the component 600 of the electronic device, loss of the peripheral device 400 when the peripheral device 400 is not in used can be avoided, and the peripheral device 400 can be conveniently taken during use.

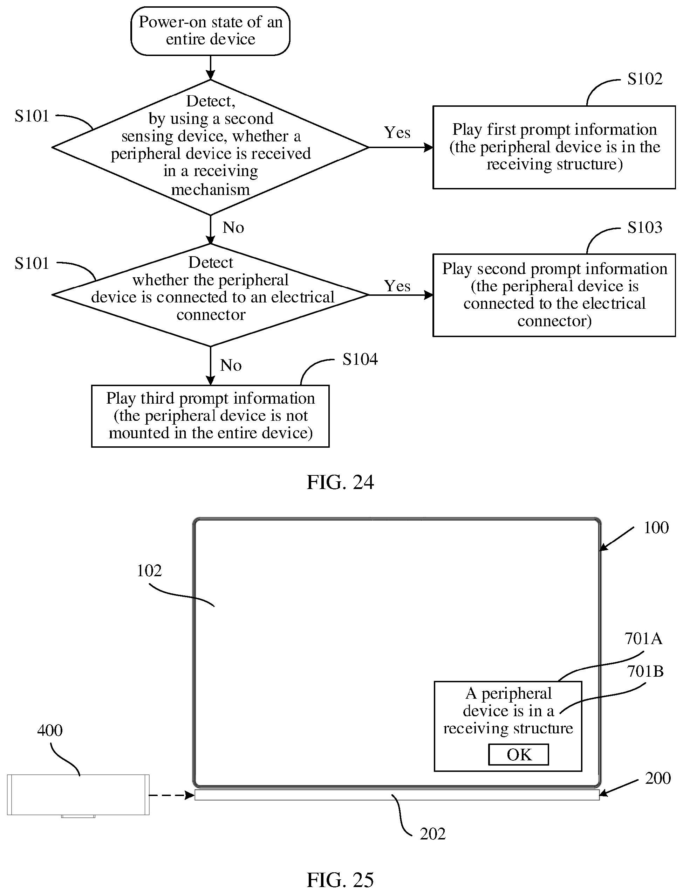

FIG. 24 is a flowchart of a peripheral device state detection method according to an embodiment of this application.

As shown in FIG. 24, in some embodiments, the peripheral device state detection method is applied to the electronic device provided in the foregoing embodiments. The method may include the following step S101 to step S104.

Step S101: The electronic device detects whether a peripheral device is received in a receiving mechanism, and detects whether the peripheral device is in a connected state with an electrical connector.

Step S102: Play first prompt information if the peripheral device is received in the receiving mechanism.

Step S103: Play second prompt information if the peripheral device is in the connected state with the electrical connector.

Step S104: Play third prompt information if the peripheral device is not received in the receiving mechanism and is not in the connected state with the electrical connector.

The entire electronic device is in a power-on state. The electronic device includes a system main board, and the system main board may be located in a second body 200. A processor is configured on the system main board, and a state of the peripheral device 400 may be detected by the processor.

In step S101, the process of detecting, by the processor, whether the peripheral device 400 is received in the receiving mechanism 203 and the process of detecting whether the peripheral device 400 is in the connected state with the electrical connector 300 are not performed sequentially or may be performed simultaneously.

The receiving mechanism 203 includes a second sensing device 204; Because the peripheral device 400 includes a second magnetic body 403, if the peripheral device 400 is received in the receiving mechanism 203, magnetism is generated in the receiving mechanism 203. Then, the second sensing device 204 detects that magnetic fields of different strengths exist in the receiving mechanism 203, and the second sensing device 204 generates an electrical signal corresponding to a magnetic field strength around the receiving mechanism 203.

In some embodiments, the process of detecting whether the peripheral device 400 is received in the receiving mechanism 203 in step S101 may include the following step S201 to step S203.

Step S201: Detect whether an electrical signal sent by the second sensing device is received.

Step S202: Determine, if the electrical signal is received, whether the electrical signal is greater than or equal to a preset signal threshold.

Step S203: Determine, if the electrical signal is greater than or equal to the preset signal threshold, that the peripheral device is received in the receiving mechanism.

The preset signal threshold is a preset signal threshold for determining whether the peripheral device 400 is received in the receiving mechanism 203.

A value of the preset signal threshold may be adjusted in a customized manner according to a quantity of magnetic bodies in the receiving mechanism 203 and a total magnetic field strength generated by the magnetic bodies.

In an implementation, when a third magnetic body 205 is not arranged in the receiving mechanism 203, and the second magnetic body 403 is arranged in the peripheral device 400, if the peripheral device 400 is not received in the receiving mechanism 203, there is no magnetism in the receiving mechanism 203, the second sensing device 204 cannot detect a magnetic field, and a corresponding electrical signal cannot be generated. If the peripheral device 400 is received in the receiving mechanism 203, magnetism generated by the second magnetic body 403 exists in the receiving mechanism 203, and the second sensing device 204 may detect a magnetic field of a strength corresponding to the magnetism generated by the second magnetic body 403, to generate a corresponding electrical signal. In this scenario, the preset signal threshold may be set to a first preset signal threshold. The first preset signal threshold is only related to a magnetic field strength that can be generated by the second magnetic body 403 in the peripheral device 400.

In another implementation, when the third magnetic body 205 is arranged in the receiving mechanism 203, and the second magnetic body 403 is arranged in the peripheral device 400, if the peripheral device 400 is not received in the receiving mechanism 203, magnetism generated by the third magnetic body 205 still exists in the receiving mechanism 203, and the second sensing device 204 may detect a magnetic field of a strength corresponding to the magnetism generated by the third magnetic body 205, to generate a corresponding electrical signal. If the peripheral device 400 is received in the receiving mechanism 203, magnetism generated by both the third magnetic body 205 and the second magnetic body 403 exists in the receiving mechanism 203, and the second sensing device 204 may detect a magnetic field of a strength corresponding to total magnetism generated by the third magnetic body 205 and the second magnetic body 403, to generate a corresponding electrical signal. In this scenario, the preset signal threshold may be set to a second preset signal threshold. The second preset signal threshold is related to a total magnetic field strength that can be generated by the third magnetic body 205 in the receiving mechanism 203 and the second magnetic body 403 in the peripheral device 400.

The second preset signal threshold is greater than the first preset signal threshold, to adapt to magnetism detection of different receiving scenarios.

In some embodiments, if the processor receives an electrical signal sent by the second sensing device 204, and the electrical signal is greater than or equal to the preset signal threshold, it indicates that a magnetic field strength generated in the receiving mechanism 203 exceeds the preset signal threshold, and it may be determined that the peripheral device 400 is received in the receiving mechanism 203. The preset signal threshold is the first preset signal threshold or the second preset signal threshold.

In some embodiments, if the processor does not receive the electrical signal, it indicates that a current receiving scenario is a scenario in which the third magnetic body 205 is not arranged in the receiving mechanism 203, and the second sensing device 204 cannot detect a magnetic field, so that it may be determined that the peripheral device 400 is not received in the receiving mechanism 203.

In some embodiments, if the processor receives an electrical signal sent by the second sensing device 204, and the electrical signal is less than the preset signal threshold, it indicates that a magnetic field strength generated in the receiving mechanism 203 is insufficient, and it may be determined that the peripheral device 400 is not received in the receiving mechanism 203.

In this way, a magnetic field strength in the receiving mechanism 203 is detected by using the second sensing device 204 to determine whether the peripheral device 400 is received in the receiving mechanism 203, thereby improving detection accuracy.

In step S102, if the peripheral device 400 is received in the receiving mechanism 203, the electronic device plays the first prompt information, where the first prompt information is used for prompting a user that the peripheral device 400 is received in the receiving mechanism 203.

A manner of playing the first prompt information may include a display manner, a voice broadcast manner, and/or the like.

FIG. 25 is a schematic diagram of an interface in which an electronic device plays first prompt information according to an embodiment of this application.

As shown in FIG. 25, in some embodiments, the process of playing the first prompt information may include the following step S301.

Step S301: Display a first prompt pop-up window 701A on a display screen 102, and display first prompt information 701B in the first prompt pop-up window 701A according to a preset time interval and a preset quantity of times.

The preset quantity of times may be customized by a user, to determine a quantity of times of playing the first prompt information. The preset time interval may also be customized by the user, to determine a time interval between two adjacent times of playing the first prompt information.

For example, prompt information "The peripheral device is in the receiving mechanism" is displayed in the first prompt pop-up window 701A, to prompt a user that the peripheral device 400 is received in the receiving mechanism 203.

The first prompt pop-up window 701A may be displayed on each region of the display screen 102 in a form of a pop-up window, a floating layer, or the like. For example, the first prompt pop-up window 701A may be displayed on a lower right corner of the display screen 102 in a form of a pop-up window.

In some embodiments, the process of playing the first prompt information may further include the following step S302.

Step S302: Invoke a voice player, and play the first prompt information in a voice manner according to the preset time interval and the preset quantity of times.

It may be understood that in this embodiment of this application, the electronic device may use either or both of the manner of displaying the first prompt information by using the first prompt pop-up window and the manner of playing the first prompt information by using the voice player.

In step S103, when the electrical connector 300 is connected to the peripheral device 400, a corresponding electrical signal may be generated. The electrical signal is sent to the system main board by using the electrical connector 300, and then is sent to the processor. When the processor receives the electrical signal, it may indicate that the peripheral device 400 is in the connected sate with the electrical connector 300.

If the peripheral device 400 is in the connected state with the electrical connector 300, the electronic device plays the second prompt information, where the second prompt information is used for prompting a user that the peripheral device 400 is in the connected state with the electrical connector 300.

A manner for playing the second prompt information may include a display manner, a voice broadcast manner, and/or the like.

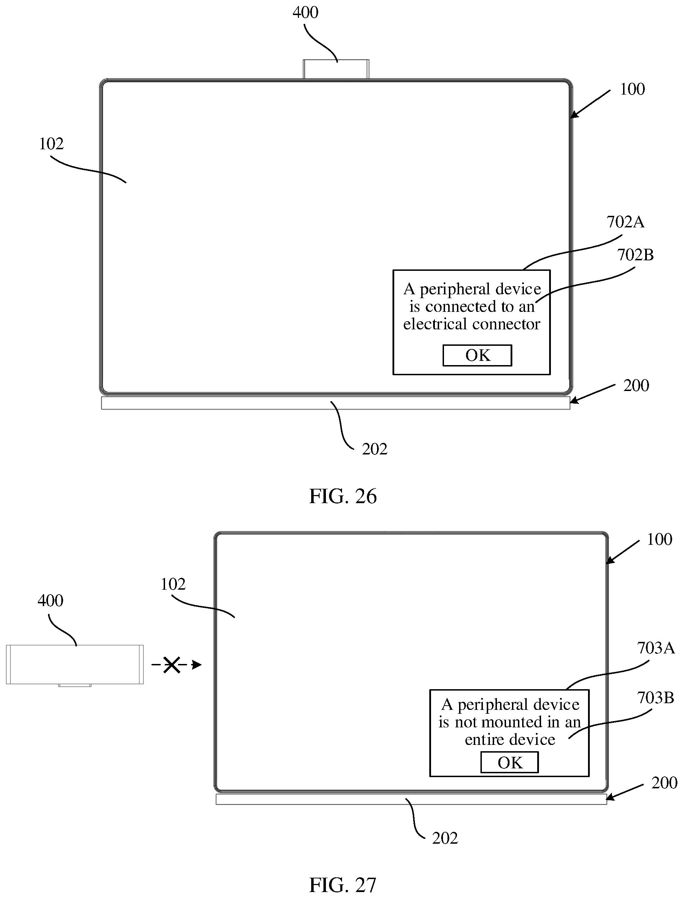

FIG. 26 is a schematic diagram of an interface in which an electronic device displays second prompt information according to an embodiment of this application.

As shown in FIG. 26, in some embodiments, the process of playing the second prompt information may include the following step S401

Step S401: Display a second prompt pop-up window 702A on a display screen 102, and display second prompt information 702B in the second prompt pop-up window 702A according to a preset time interval and a preset quantity of times.

For example, prompt information "The peripheral device is connected to the electrical connector" is displayed in the second prompt pop-up window 702A, to prompt a user that the peripheral device 400 is in the connected state with the electrical connector 300, and the peripheral device 400 is being used.

In some embodiments, the process of playing the second prompt information may further include the following step S402.

Step S402: Invoke a voice player, and play the second prompt information in a voice manner according to the preset time interval and the preset quantity of times.

It may be understood that, for a process in which the electronic device plays the second prompt information, refer to the process of playing the first prompt information. Details are not described herein again.

In step S104, if the processor detects that the peripheral device 400 is not received in the receiving mechanism 203 and is not in the connected state with the electrical connector 300, it indicates that the peripheral device 400 is not received in the receiving mechanism 203 and has not been used.

To avoid loss of the peripheral device, the electronic device plays the third prompt information. The third prompt information is used for prompting a user that the peripheral device 400 is not received in the receiving mechanism 203, and is not in the connected state with the electrical connector 300. A manner of playing the third prompt information may include a display manner, a voice broadcast manner, and/or the like.

In this way, different detection results may be obtained, to play prompt information corresponding to the different detection results to the user, so that the user learns of different states of the peripheral device 400 in real time.

FIG. 27 is a schematic diagram of an interface in which an electronic device plays third prompt information according to an embodiment of this application.

As shown in FIG. 27, in some embodiments, the process of playing the third prompt information may include the following step S501.

Step S501: Display a second prompt pop-up window 703A on a display screen 102, and display third prompt information 703B in the second prompt pop-up window 703A according to a preset time interval and a preset quantity of times.

For example, prompt information "The peripheral device is not mounted in the entire device" is displayed in the third prompt pop-up window 703A, to prompt a user that the peripheral device 400 is not received in the receiving mechanism 203, and is not in the connected state with the electrical connector 300.

In some embodiments, the process of playing the third prompt information may further include the following step S502.

Step S502: Invoke a voice player, and play the third prompt information in a voice manner according to the preset time interval and the preset quantity of times.

It may be understood that, for a process in which the electronic device plays the third prompt information, refer to the process of playing the first prompt information. Details are not described herein again.

In some embodiments, the electronic device further supports a user in customizing whether to enable a prompt function. If the user has enabled the prompt function, when detection results that the peripheral device 400 is received in the receiving mechanism 203, the peripheral device 400 is in the connected state with the electrical connector 300, and the peripheral device 400 is not received in the receiving mechanism 203 and is not in the connected state with the electrical connector 300 are obtained through detection, corresponding prompt information is played. If the user does not enable the prompt function, the detection process is not performed, and the corresponding prompt information is not played either.

In some embodiments, the step S104 may include the following step S601 and step S602.

Step S601: Start to accumulate first duration if the received electrical signal starts to decrease from the preset signal threshold.

Step S602: Play third prompt information if it is not detected that the peripheral device is in the connected state with the electrical connector when the first duration is greater than or equal to a first time threshold.

If the electrical signal received by the processor and sent by the second sensing device 204 starts to decrease from the preset signal threshold, it indicates that the peripheral device 400 is taken out from the receiving mechanism 203. The first duration is total duration for which the peripheral device 400 is taken out from the receiving mechanism 203. The first time threshold is reserved operation duration for which the peripheral device 400 is taken out from the receiving mechanism 203 and is connected to the electrical connector 300.

If the processor does not detect that the peripheral device is in the connected state with the electrical connector when the first duration is greater than or equal to the first time threshold, it indicates that the peripheral device 400 is not electrically connected to the electrical connector 300 in time after being taken out from the receiving mechanism 203. Next, to avoid loss of the peripheral device 400, the electronic device plays the third prompt information, to prompt a user that the peripheral device 400 is not received in the receiving mechanism 203, and is not in the connected state with the electrical connector 300. In this way, a state of the peripheral device 400 can be accurately detected, to accurately play prompt information to the user.

For the process in which the electronic device plays the third prompt information, refer to the content of step S501 and/or the content of step S502 provided in the foregoing embodiment. Details are not described herein again.

In some embodiments, step S104 may include the following step S701 and step S702.

Step S701: Start to accumulate second duration if it is detected that the peripheral device changes from the connected state to an unconnected state with the electrical connector.

Step S702: Play third prompt information if it is not detected that the peripheral device is received in the receiving mechanism when the second duration is greater than or equal to a second time threshold.

If the processor changes from receiving an electrical signal sent by the electrical connector 300 to not receiving the electrical signal sent by the electrical connector 300, it indicates that the peripheral device 400 is disconnected from the electrical connector 300, that is, it is detected that the peripheral device 400 changes from the connected state to the unconnected state with the electrical connector. The second duration is total duration for which the peripheral device 400 is disconnected from the electrical connector 300. The second time threshold is reserved operation duration for which the peripheral device 400 is disconnected from the electrical connector 300 and is received in the receiving mechanism 203.

When the second duration is greater than or equal to the second time threshold, if the processor does not receive an electrical signal sent by the second sensing device 204, it indicates that the peripheral device 400 is not received in the receiving mechanism 203 in time after being disconnected from the electrical connector 300. Next, to avoid loss of the peripheral device 400, the electronic device plays the third prompt information, to prompt a user that the peripheral device 400 is not received in the receiving mechanism 203, and is not in the connected state with the electrical connector 300. In this way, a state of the peripheral device can be accurately detected, to accurately play prompt information to the user.

For the process in which the electronic device plays the third prompt information, refer to the content of step S501 and/or the content of step S502 provided in the foregoing embodiment. Details are not described herein again.

In some embodiments, the receiving mechanism 203 may be built in the electronic device, or may be externally arranged independently, for example, may be an external receiving chamber 500.

It should be noted that, for the processes of detecting, by using the first sensing device, whether the peripheral device 400 is in the connected state with the electrical connector 300, and detecting, by using the third sensing device, whether the peripheral device 400 is received in the receiving chamber 500, correspondingly refer to the process of detecting, by the electronic device by using the second sensing device 204, whether the peripheral device 400 is received in the receiving mechanism 203. Details are not described herein again.

According to the peripheral device state detection method provided in this embodiment of this application, anti-loss detection logic of the peripheral device 400 is provided, that is, it is detected whether the peripheral device 400 is received in the receiving mechanism 203, and it is detected whether the peripheral device 400 is in the connected state with the electrical connector 300. In addition, corresponding prompt information may be played according to different detection results, and a state of the peripheral device 400 may be provided to a user in time, to avoid loss of the peripheral device 400.

The solutions of the peripheral device state detection method provided in this application are described in the foregoing embodiments provided in this application. It may be understood that, to implement the foregoing functions, the electronic device includes a corresponding hardware structure and/or software module for performing each function. A person skilled in the art should easily realize that in combination with units and algorithm steps of the examples described in the embodiments disclosed in this specification, this application can be implemented by hardware or a combination of hardware and computer software. Whether a function is executed by hardware or computer software driving hardware depends on particular applications and design constraint conditions of the technical solutions. A person skilled in the art may use different methods to implement the described functions for each particular application, but it should not be considered that the implementation falls outside the scope of this application.

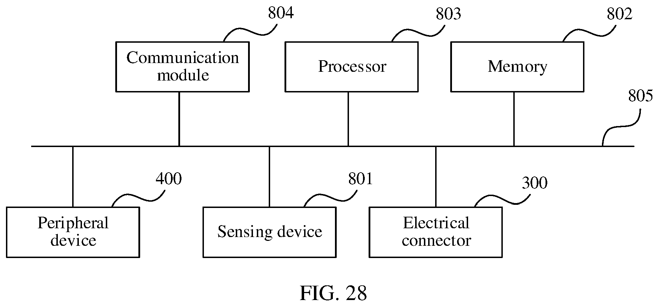

FIG. 28 is a structural block diagram of an electronic device according to an embodiment of this application. In an embodiment, the electronic device may implement a corresponding function by using the hardware apparatus shown in FIG. 28.

As shown in FIG. 28, the electronic device may include: a sensing device 801, a memory 802, a processor 803, a communication module 804, an electrical connector 300, and a peripheral device 400. The foregoing components may be connected through one or more communication buses 805.

In an embodiment, the sensing device 801 is configured to detect a state of the peripheral device 400, for example, detect whether the peripheral device 400 is connected to the electrical connector 300, detect whether the peripheral device 400 is received in the receiving mechanism 203, and detect whether the peripheral device 400 is received in the receiving chamber 500. The sensing device 801 includes any one of the first sensing device, the second sensing device 204, and the third sensing device. The processor 803 may include one or more processing units. For example, the processor 803 may include an application processor, a modem processor, a graphics processing unit, an image signal processor, a controller, a video codec, a digital signal processor, a baseband processor, and/or a neural network processor. Different processing units may be independent components, or may be integrated into one or more processors. The memory 802 is coupled to the processor 803, and is configured to store various software programs and/or a plurality of groups of instructions. The memory 802 may include a volatile memory and/or a non-volatile memory.

When the software program and/or the plurality of groups of instructions in the memory 802 are executed by the processor 803, the electronic device is enabled to implement step S101 to step S104 in the method.

In the electronic device provided in this embodiment of this application, anti-loss detection logic of the peripheral device is provided, that is, it may be detected whether the peripheral device is received in the receiving mechanism, and it may be detected whether the peripheral device is in a connected state with the electrical connector. In addition, corresponding prompt information may be played according to different detection results, and a state of the peripheral device may be provided to the user in time, to avoid loss of the peripheral device.

When the software program and/or the plurality of groups of instructions in the memory 802 are executed by the processor 803, the electronic device is enabled to implement step S201 to step S203 in the method. In this way, a magnetic field strength in the receiving mechanism is detected by using the second sensing device, to determine whether the peripheral device is received in the receiving mechanism, thereby improving detection accuracy.

When the software program and/or the plurality of groups of instructions in the memory 802 are executed by the processor 803, the electronic device implements the method, including determining, if an electrical signal is not received or the electrical signal is less than a preset signal threshold, that the peripheral device is not received in the receiving mechanism. In this way, different detection results may be obtained, to play prompt information corresponding to the different detection results to the user, so that the user learns of different states of the peripheral device in real time.

When the software program and/or the plurality of groups of instructions in the memory 802 are executed by the processor 803, the electronic device is enabled to implement step S601 and step S602 in the method. In this way, a state of the peripheral device can be accurately detected, to accurately play prompt information to a user.

When the software program and/or the plurality of the groups of instructions in the memory 802 are executed by the processor 803, the electronic device is enabled to implement step S701 and step S702 in the method. In this way, a state of the peripheral device can be accurately detected, to accurately play prompt information to the user.

When the software program and/or the plurality of groups of instructions in the memory 802 are executed by the processor 803, the electronic device is enabled to implement step S301 and step S302, step S401 and step S402, or step S501 and step S502 in the method. In this way, a plurality of manners of playing prompt information are provided, to improve user experience.

An embodiment of this application further provides an electronic device, including a memory and a processor, The memory stores program instructions, and when the program instructions are executed by the processor, the electronic device is enabled to perform the peripheral device state detection method provided in the foregoing embodiments.

An embodiment of this application further provides a computer-readable storage medium. The computer-readable storage medium store instructions, and when the instructions are run on a computer, the computer is enabled to perform the peripheral device state detection method provided in the foregoing embodiments.

An embodiment of this application further provides a computer program product including instructions. When the computer program product runs on a computer, the computer is enabled to perform the peripheral device state detection method provided in the foregoing embodiments.

An embodiment of this application further provides a chip system. The chip system includes a processor, configured to support the terminal system in implementing the function involved in the foregoing aspects, for example, generating or processing information involved in the foregoing method.

It may be understood that the electronic device, the computer-readable storage medium, the computer program product including instructions, and the chip system that are provided in the foregoing aspects are all used in the corresponding method provided above. Therefore, for beneficial effects that can be achieved by the electronic device, the computer-readable storage medium, and the computer program product, refer to the beneficial effects in the corresponding method provided above. Details are not described herein again.

It should be noted that a person skilled in the art can easily figure out another implementation solution of this application after considering this specification and practicing this application that is disclosed herein. This application is intended to cover any variation, use, or adaptive change of this application. These variations, uses, or adaptive changes follow the general principles of this application and include common general knowledge or common technical means in the art that are not disclosed in this application. This specification and the embodiments are c merely considered as examples, and the actual scope of this application is pointed out by the following claims.

It should be understood that this application is not limited to the accurate structures described above and shown in the accompanying drawings, and various modifications and changes can be made without departing from the scope of this application. The scope of this application is limited only by the appended claims.

## Claims

1. An electronic device, comprising:
a first body (100), wherein the first body (100) comprises a first bezel (101) and a display screen (102), the first bezel (101) surrounds an outer edge of the display screen (102), and an extension direction of the first bezel (101) is different from an extension direction of the display screen (102); and
an electrical connector (300), wherein the electrical connector (300) is arranged at the first bezel (101); the electrical connector (300) comprises a plurality of first terminals (301) exposed to the first bezel (101); and
the electrical connector (300) is configured to detachably connect to a peripheral device, so that the plurality of first terminals (301) are electrically connected to a plurality of second terminals of the peripheral device.

2. The electronic device according to claim 1, wherein
a mounting slot (1011) is provided on the first bezel (101);
the plurality of first terminals (301) are exposed in the mounting slot (1011); and
the mounting slot (1011) is configured to enable at least a part of the peripheral device to be detachably embedded in the mounting slot (1011), so that the plurality of second terminals of the peripheral device are electrically connected to the plurality of first terminals (301) of the electrical connector (300).

3. The electronic device according to claim 2, wherein
the plurality of first terminals (301) are distributed at equal intervals in a length direction of the first bezel (101); and
the plurality of second terminals are distributed at equal intervals in a length direction of the peripheral device in a one-to-one correspondence with the plurality of first terminals (301).

4. The electronic device according to claim 3, wherein
terminal definitions of the plurality of first terminals (301) are arranged in a centrally symmetrical manner.

5. The electronic device according to claim 2, wherein
the first body (100) further comprises at least one first magnetic body (104); and
the at least one first magnetic body (104) is located at an inner side of the first bezel (101) and is adjacent to the electrical connector (300).

6. The electronic device according to claim 5, wherein
an inner surface of the first bezel (101) comprises at least one first receiving groove (1012);
the at least one first receiving groove (1012) is adjacent to the mounting slot (1011); and
the at least one first magnetic body (104) is arranged in a one-to-one correspondence in the at least one first receiving groove (1012).

7. The electronic device according to claim 5,
further comprising: a first sensing device, wherein
the first sensing device is located at the inner side of the first bezel (101) and is adjacent to the at least one first magnetic body (104); and
the first sensing device is configured to detect whether the peripheral device is in a connected state with the electrical connector (300).

8. The electronic device according to claim 6, wherein
the electrical connector (300) further comprises a plurality of cables (302), and the plurality of cables (302) are connected to the plurality of first terminals (301);
the first body (100) comprises a first housing, the first housing comprises a housing body (103) and the first bezel (101), the housing body (103) is arranged at a back surface of the display screen (102), and the first bezel (101) surrounds an outer edge of the housing body (103);
the housing body (103) comprises a first housing surface (1031), and the first housing surface (1031) faces the display screen (102); and
the first housing surface (1031) comprises a second receiving groove (1033), the second receiving groove (1033) is adjacent to the mounting slot (1011), and the second receiving groove (1033) is configured to provide routing space for the plurality of cables (302).

9. The electronic device according to claim 8, wherein
the housing body (103) further comprises a second housing surface (1032), and the second housing surface (1032) faces an external environment;
a depth of the second receiving groove (1033) is greater than a thickness of the housing body (103), so that a part of the second housing surface (1032) adjacent to the mounting slot (1011) forms a convex hull structure (1034) protruding toward the external environment; and
projection regions of the electrical connector (300) and the at least one first magnetic body (104) on the second housing surface (1032) are located in a projection region of the convex hull structure (1034) on the second housing surface (1032).

10. The electronic device according to claim 9, wherein
the first housing surface (1031) further comprises a third receiving groove (1035);
the second receiving groove (1033) is located in the third receiving groove (1035), and a depth of the third receiving groove (1035) is less than the depth of the second receiving groove (1033); and
the at least one first receiving groove (1012) is located in a length range of the third receiving groove (1035).

11. The electronic device according to claim 8, wherein
the electrical connector (300) further comprises a metal medium and an insulating member (303), and the insulating member (303) wraps an outer side of the metal medium; and
the metal medium is configured to form the plurality of first terminals (301) and the plurality of cables (302), the plurality of first terminals (301) are exposed from one end surface of the insulating member (303), and the plurality of cables (302) are exposed and extended from the other end surface of the insulating member (303).

12. The electronic device according to claim 8, wherein
the first body (100) further comprises a buffer medium (105);
the buffer medium (105) is located between the first bezel (101) and the display screen (102); and
at least a part of the buffer medium (105) extends along a back side of the first terminal (301) and approaches the cable (302).

13. The electronic device according to claim 1,
further comprising: a second body (200), wherein the second body (200) is rotatably connected to the first body (100);
the second body (200) comprises a second bezel (202);
a receiving mechanism (203) is arranged inside the second body (200); and
the receiving mechanism (203) is adjacent to the second bezel (202), and a receiving hole (2021) is provided on the second bezel (202), so that the peripheral device is received in the receiving mechanism (203) through the receiving hole (2021).

14. The electronic device according to claim 13, wherein
the second body (200) further comprises a second sensing device (204); and
the second sensing device (204) is arranged in the receiving mechanism (203), and the second sensing device (204) is configured to detect whether the peripheral device is received in the receiving mechanism (203).

15. The electronic device according to claim 13, wherein
the second body (200) further comprises at least one third magnetic body (205);
the at least one third magnetic body (205) is spaced apart and located on a surface of the receiving mechanism (203) facing the receiving hole (2021); and
the third magnetic body (205) is configured to absorb the peripheral device, so that the peripheral device is fixed in the receiving mechanism (203).

16. The electronic device according to claim 13, wherein
the receiving mechanism (203) comprises at least one spring fastener, and the at least one spring fastener is located on a surface of the receiving mechanism (203) facing the receiving hole (2021); and
when the peripheral device is received in the receiving mechanism (203), the at least one spring fastener is configured to: be distributed on two sides of the second terminal of the peripheral device, be in elastic contact with the peripheral device, and eject the peripheral device from the receiving mechanism (203) when the peripheral device is pressed externally.

17. A peripheral device, comprising:
a device body (401);
a plurality of second terminals (402), located at one end of the device body (401) and protruding toward an external environment relative to the device body (401); and
at least one second magnetic body (403), located in the device body (401) and located at one end of the device body (401) on which the plurality of second terminals (402) are arranged, wherein the at least one second magnetic body (403) is adjacent to the plurality of second terminals (402); and
the device body (401) is configured to detachably connect to an electrical connector of an electronic device, so that the plurality of second terminals (402) are electrically connected to a plurality of first terminals of the electrical connector, and the second magnetic body (403) is attracted to a first magnetic body arranged in the electronic device.

18. A terminal system, comprising:
the electronic device according to any one of claims 1 to 16 and the peripheral device according to claim 17, wherein
the peripheral device is electrically connected to the electrical connector of the electronic device, or the peripheral device is received in the receiving mechanism of the electronic device.

19. The terminal system according to claim 18,
further comprising: a receiving chamber (500), wherein
the receiving chamber (500) is configured to receive the peripheral device; and
the receiving chamber (500) comprises a third sensing device, and the third sensing device is configured to detect whether the peripheral device is received in the receiving chamber (500).

20. A peripheral device state detection method, applied to the electronic device according to any one of claims 1 to 16, and the method comprising:
detecting, by the electronic device, whether the peripheral device is received in a receiving mechanism, and detecting whether the peripheral device is in a connected state with the electrical connector
playing first prompt information if the peripheral device is received in the receiving mechanism;
playing second prompt information if the peripheral device is in the connected state with the electrical connector; and
playing third prompt information if the peripheral device is not received in the receiving component and is not in the connected state with the electrical connector.

21. The method according to claim 20, wherein the receiving mechanism comprises a second sensing device, the peripheral device comprises a second magnetic body, and the second sensing device is configured to generate an electrical signal corresponding to a magnetic field strength around the receiving mechanism; and
the detecting whether the peripheral device is received in a receiving mechanism comprises:
detecting whether the electrical signal sent by the second sensing device is received;
determining, if the electrical signal is received, whether the electrical signal is greater than or equal to a preset signal threshold; and
determining, if the electrical signal is greater than or equal to the preset signal threshold, that the peripheral device is received in the receiving mechanism.

22. The method according to claim 21, wherein
the detecting whether the peripheral device is received in a receiving mechanism further comprises:
determining, if the electrical signal is not received or the electrical signal is less than the preset signal threshold, that the peripheral device is not received in the receiving mechanism.

23. The method according to claim 22, wherein
the playing third prompt information if the peripheral device is not received in the receiving mechanism and is not in the connected state with the electrical connector comprises:
starting to accumulate first duration if the received electrical signal starts to decrease from the preset signal threshold; and
playing the third prompt information if it is not detected that the peripheral device is in the connected state with the electrical connector when the first duration is greater than or equal to a first time threshold.

24. The method according to claim 22,
the playing third prompt information if the peripheral device is not received in the receiving mechanism and is not in the connected state with the electrical connector comprises:
starting to accumulate second duration if it is detected that the peripheral device changes from the connected state to an unconnected state with the electrical connector; and
playing the third prompt information if it is not detected that the peripheral device is received in the receiving mechanism when the second duration is greater than or equal to a second time threshold.

25. The method according to claim 20, wherein the electronic device comprises a display screen;
when displaying target prompt information, the method comprises:
displaying a target prompt pop-up window on the display screen, and displaying the target prompt information in the target prompt pop-up window according to a preset time interval and a preset quantity of times; and/or
invoking a voice player, and playing the target prompt information in a voice manner according to the preset time interval and the preset quantity of times, wherein
the target prompt information comprises one of the first prompt information, the second prompt information, and the third prompt information.
